# EUROPEAN PATENT SPECIFICATION

(11) **EP 4 369 029 B1**
(45) Date of publication and mention of the grant of the patent: **07.10.2026**
(21) Application number: 21953176.1
(22) Date of filing: 13.08.2021
(51) Int. Cl.: G01S 7/48, G01S 17/08, G01S 7/481, G01S 17/42, G01S 17/931

(54) **RECEIVING OPTICAL SYSTEM, LIDAR SYSTEM AND TERMINAL DEVICE**
OPTISCHES EMPFANGSSYSTEM, LIDAR-SYSTEM UND ENDGERÄT
SYSTÈME OPTIQUE DE RÉCEPTION, SYSTÈME LIDAR ET DISPOSITIF TERMINAL

(43) Date of publication of application: 15.05.2024
(73) Proprietor: Yinwang Intelligent Technologies Co., Ltd., Shenzhen, Guangdong 518110 (CN)
(72) Inventor: AN, Kai, Shenzhen, Guangdong 518129 (CN); YU, Anliang, Shenzhen, Guangdong 518129 (CN); WANG, Shuai, Shenzhen, Guangdong 518129 (CN); QIU, Sunjie, Shenzhen, Guangdong 518129 (CN); HAN, Wei, Shenzhen, Guangdong 518129 (CN)
(74) Representative: Körber, Martin Hans
(86) International application number: PCT/CN2021/112524
(87) International publication number: WO 2023/015563

(56) References cited:
- WO-A1-2021/016801
- WO-A1-2021/016801
- CN-A- 101 299 066
- CN-A- 101 630 006
- CN-A- 112 147 595
- CN-A- 113 030 910
- US-A1- 2021 109 199

## Description

### TECHNICAL FIELD

This application relates to the field of detection technologies, and in particular, to a receiving optical system, a lidar system, and a terminal device.

### BACKGROUND

With the development of science and technology, intelligent terminals such as intelligent transportation devices, smart home devices, robots, and vehicles are gradually applied to people's daily lives. Sensors play an increasingly important role in the intelligent terminals. Various sensors (such as lidar systems or cameras) installed on the intelligent terminals can sense surrounding environments, collect data, identify and track moving objects, identify static scenarios such as lane lines and signs, and perform route planning based on navigators and map data. A lidar system is used as an example. The lidar system transmits signal light, and receives an echo signal obtained after a target reflects the signal light, so that distance information and the like of the target may be determined based on the echo signal. The echo signal is affected by transmit power, target reflectivity, an atmospheric condition, a distance, and the like, and only a weak signal can be received by the lidar system. Therefore, the lidar system usually uses a single-photon detector with high sensitivity, for example, a single-photon avalanche diode (single-photon avalanche diode, SPAD).

The detector usually includes a light sensitive unit (cell) array, and an output signal of each cell has only two level modes: 0 and 1. Therefore, a dynamic range in which a lidar system responds to an echo signal is limited. To improve the dynamic range in which a lidar system responds to an echo signal, N cells may be merged into one pixel (Pixel), and one pixel outputs one signal. The signal output by the pixel is superposition of output signals of the N cells, where N is an integer greater than 1. A pixel obtained by merging cells has a capability of improving a dynamic range. However, if some cells in the pixel cannot receive signal light, the dynamic range in which a lidar system responds to an echo signal still cannot be effectively improved.

In conclusion, how to effectively improve the dynamic range in which a lidar system responds to an echo signal is a technical problem that urgently needs to be resolved currently. Document WO 2021/016801 A1 describes a receiving optical system, by means of which a receiving system can better match a photosensitive surface of a receiving sensor, so that the energy receiving efficiency of the system is improved. Document US 2021/109199 A1 describes a Light Detection and Ranging (LIDAR) receiver including a receiver optics, at least one silicon photomultiplier (SiPM) pixel, and a spatial filter.

### SUMMARY

This application provides a receiving optical system, a lidar system, and a terminal device, to improve, as much as possible, a dynamic range in which a detection module responds to an echo signal. The invention is defined in the independent claims. Additional features of the invention are provided in the dependent claims. In the following, parts of the description and drawings referring to implementations which are not covered by the claims are not presented as implementations of the invention, but as examples useful for understanding the invention.

According to a first aspect, this application provides a receiving optical system. The receiving optical system may include a receiving module and a detection module. The receiving module is configured to receive: an echo signal, separate a horizontal focal plane from a vertical focal plane of the echo signal, and propagate the echo signal to the detection module, and the echo signal is obtained after signal light from a transmitting optical system is reflected by a target in a detection region; and the detection module is configured to perform optical-electrical conversion on the echo signal, to obtain an electrical signal that is used to determine association information of the target.

Based on this solution, because the receiving module separates the horizontal focal plane from the vertical focal plane of the echo signal, that is, the vertical focal plane and the horizontal focal plane of the echo signal that are emitted to the detection module through the receiving module are separated. The vertical focal plane and the horizontal focal plane of the echo signal are separated, so that a light spot of the echo signal received by the detection module is diffused in a direction corresponding to at least one focal plane, the light spot in the dispersion direction may cover a large light sensitive area of the detection module. When strength of the echo signal received by the detection module is fixed, because the echo signal may cover the large light sensitive area, it is equivalent to that a quantity of photons detected in a unit light sensitive area is reduced, so that an anti-saturation capability of a unit light sensitive area can be improved, that is, an echo signal of higher strength can be detected in a unit area. In other words, the light spot in the dispersion direction may cover a large light sensitive area. If the large light sensitive area is saturated, a higher-strength echo signal is required. Based on this, a dynamic range in which the detection module responds to an echo signal is improved.

For example, when the detection module is located on the vertical focal plane, a light spot of an echo signal received by the detection module is focused in a direction corresponding to the vertical focal plane is not affected. In addition, because the light spot is diffused in the direction corresponding to the horizontal focal plane, the light spot may cover a large light sensitive area of the detection module in the direction corresponding to the horizontal focal plane, thereby improving the anti-saturation capability of a unit light sensitive area, and further improving the dynamic range of the detection module. For another example, when the detection module is located on the horizontal focal plane, a light spot of an echo signal received by the detection module is focused in a direction corresponding to the horizontal focal plane, and is diffused in a direction corresponding to the vertical focal plane. That is, a size of the light spot in the direction corresponding to the horizontal focal plane does not change, and therefore, spatial resolution in the direction corresponding to the horizontal focal plane is not affected. In addition, because the light spot is diffused in the direction corresponding to the vertical focal plane, the light spot may cover a large light sensitive area of the detection module in the direction corresponding to the vertical focal plane, thereby improving the anti-saturation capability of a unit light sensitive area, and further improving the dynamic range of the detection module. Further, when the receiving optical system is applied to strong background stray light, because the dynamic range in which the detection module responds to an echo signal is high, it is difficult for the strong background stray light to cause saturation of the detection module, thereby helping improve a capability of the receiving optical system to resist background stray light, and further improving a ranging capability of the detection module under strong background stray light.

In a possible implementation, the receiving module includes a receiving mirror group and a focal power element, where a horizontal equivalent focal power and a vertical equivalent focal power of the focal power element are different.

By using the focal power element with the horizontal equivalent focal power different from the vertical equivalent focal power, a horizontal focal plane and a vertical focal plane of an echo signal emitted to the detection module can be simply separated; and the echo signal can be focused to the detection module as much as possible by using the receiving mirror group.

Further, optionally, the focal power element includes a one-dimensional focal power element or a two-dimensional focal power element. The one-dimensional focal power element includes at least one or a combination of a one-dimensional cylindrical mirror, a one-dimensional wedge, or a one-dimensional grating; or the two-dimensional focal power element includes at least one or a combination of a ring mirror, a two-dimensional cylindrical mirror, a saddle mirror, a two-dimensional grating, or a two-dimensional wedge.

If the focal power element is a one-dimensional focal power element, a processing process of the focal power element is simplified.

In a possible implementation, the focal power element is located on an object side of the receiving mirror group. In another possible implementation, the focal power element is located between the receiving mirror group and the detection module. In still another possible implementation, the focal power element is located between any two adjacent receiving mirrors in the receiving mirror group, and the receiving mirror group includes at least two receiving mirrors.

The focal power element is disposed between an object side and an image side of the receiving mirror group, or any two adjacent receiving mirror groups, so that after an echo signal passes through the focal power element, the horizontal focal plane and the vertical focal plane are separated.

In a possible implementation, the detection module is located on the vertical focal plane, and the horizontal equivalent focal power of the focal power element is greater than the vertical equivalent focal power.

When the horizontal equivalent focal power of the focal power element is greater than the vertical equivalent focal power, an echo signal converges on the horizontal focal plane first, and then converges on the vertical focal plane. In other words, in a direction from the object side to the image side of the receiving module, the horizontal focal plane is closer to the object side than the vertical focal plane, that is, the vertical focal plane is closer to the image side than the horizontal focal plane. Further, for the detection module located on the vertical focal plane, a light spot of the received echo signal is diffused in a direction corresponding to the horizontal focal plane, and a light spot is converged in a direction corresponding to the vertical focal plane. In this way, a dynamic range of the detection module can be improved while it is ensured that spatial resolution in the direction corresponding to the vertical focal plane remains unchanged.

Further, optionally, the receiving optical system further includes a first stop located on the horizontal focal plane.

The first stop located on the horizontal focal plane may allow an echo signal in an effective field of view in the direction corresponding to the horizontal focal plane to pass through, and may suppress background stray light outside the effective field of view in the direction corresponding to the horizontal focal plane to pass through, thereby helping reduce background stray light emitted to the detection module.

In a possible implementation, a shape of the first stop may be a rectangle, a short side of the first stop is parallel to a direction corresponding to the horizontal focal plane, and a long side of the first stop is parallel to a direction corresponding to the vertical focal plane. Further, optionally, a length L₁ of the short side of the first stop meets: L₁=Horizontal angular resolution of the receiving optical system×Equivalent focal length in the direction corresponding to the horizontal focal plane of the receiving optical system.

Length L₁ of the short side of the first stop=Horizontal angular resolution of the receiving optical system×Equivalent focal length in the direction corresponding to the horizontal focal plane of the receiving optical system. This can effectively suppress background stray light from being emitted to the detection module, and can avoid an echo signal loss as much as possible, thereby further improving the dynamic range in which the detection module responds to an echo signal.

In a possible implementation, Length L₂ of the long side of the first stop meets: L₂≥Vertical angle of view of the receiving optical system×Equivalent focal length in the direction corresponding to the vertical focal plane of the receiving optical system.

Length L₂ of the long side of the first stop≥Vertical angle of view of the receiving optical system×Equivalent focal length in the direction corresponding to the vertical focal plane of the receiving optical system, so that an echo signal in the direction corresponding to the vertical focal plane can converge to the detection module as much as possible, thereby helping improve echo signal utilization.

In a possible implementation, the detection module is located on the horizontal focal plane, and the vertical equivalent focal power of the focal power element is greater than the horizontal equivalent focal power of the focal power element.

When the vertical equivalent focal power of the focal power element is greater than the horizontal equivalent focal power, an echo signal converges on the vertical focal plane first, and then converges on the horizontal focal plane. In other words, in a direction from the object side to the image side of the receiving module, the vertical focal plane is closer to the object side than the horizontal focal plane, and the horizontal focal plane is closer to the image side than the vertical focal plane. Further, for the detection module located on the horizontal focal plane, a light spot of the received echo signal is diffused in a direction corresponding to the vertical focal plane, and a light spot is converged in a direction corresponding to the horizontal focal plane. In this way, a dynamic range of the detection module can be improved while it is ensured that spatial resolution in the direction corresponding to the horizontal focal plane remains unchanged.

In a possible implementation, the receiving optical system further includes a second stop located on the vertical focal plane.

The second stop located on the vertical focal plane may allow an echo signal in an effective field of view in the direction corresponding to the vertical focal plane to pass through, and may suppress background stray light outside the effective field of view in the direction corresponding to the vertical focal plane to pass through, thereby helping reduce background stray light emitted to the detection module, and further improving the dynamic range in which the detection module responds to the echo signal.

In a possible implementation, a shape of the second stop may be a rectangle, a short side of the second stop is parallel to the direction corresponding to the vertical focal plane, and a long side of the second stop is parallel to the direction corresponding to the horizontal focal plane. Further, optionally, a length L₃ of the short side of the second stop meets: L₃=Vertical angular resolution of the receiving optical system×Equivalent focal length in the direction corresponding to the vertical focal plane of the receiving optical system.

The length L₃ of the short side of the second stop is equal to a product of the vertical angular resolution of the receiving optical system and the equivalent focal length in the direction corresponding to the vertical focal plane of the receiving optical system. This can effectively suppress background stray light from being emitted to the detection module, and can also avoid an echo signal loss as much as possible, thereby further improving the dynamic range in which the detection module responds to the echo signal.

In a possible implementation, a length L₄ of the long side of the second stop meets: L₄ ≥Horizontal angle of view of the receiving optical system×Equivalent focal length in the direction corresponding to the horizontal focal plane of the receiving optical system.

Length L₄ of the long side of the second stop≥Horizontal angle of view of the receiving optical system×Equivalent focal length in the direction corresponding to the horizontal focal plane of the receiving optical system. In this way, an echo signal in the direction corresponding to the horizontal focal plane can be converged to the detection module as much as possible, thereby helping improve echo signal utilization.

According to a second aspect, this application provides a lidar system, where the lidar system may include a transmitting optical system and the receiving optical system according to the first aspect or the implementations of the first aspect, and the transmitting optical system is configured to transmit signal light.

For technical effects that can be achieved in the second aspect, refer to descriptions of advantageous effects in the first aspect. Details are not described herein again.

In a possible implementation, the lidar system further includes a processing module, configured to: receive an electrical signal from the receiving optical system, and determine association information of the target based on the electrical signal.

In a possible implementation, signal light emitted to a detection region may be a linear light beam, and an echo signal received by the detection module is also a linear light beam. Specifically, the transmitting optical system includes a light source array, and the detection module includes a pixel array. The lidar system may use a line-scanning line-receiving mode. Specifically, the light source array is gated by row, and the pixel array is gated by row; or the light source array is gated by column, and the pixel array is gated by column. It may also be understood that signal light transmitted by the transmitting optical system is a linear light beam, and correspondingly, the detection module selects one column or one row of pixels to receive an echo signal.

Further, optionally, pixels in the pixel array include at least two merged light sensitive units. In other words, the pixels in the pixel array may be obtained by merging the at least two merged light sensitive units.

The at least two light sensitive units are merged into one pixel, and echo signals (that is, photons) sensed by all light sensitive units in the merged at least two light sensitive units are superimposed together and read in a manner of one pixel. This helps reduce a quantity of photons sensed by a single light sensitive unit, so that the detection module (for example, the pixel array) has a capability of implementing a high dynamic range.

According to a third aspect, this application provides a terminal device. The terminal device may include the lidar system according to any one of the second aspect or the possible implementations of the second aspect.

For technical effects that can be achieved in the third aspect, refer to descriptions of advantageous effects in the first aspect. Details are not described herein again.

### BRIEF DESCRIPTION OF DRAWINGS

FIG. 1a is a schematic diagram of a structure of a detection module according to this application;
FIG. 1b is a schematic diagram of a relationship between spatial resolution and a pixel size according to this application;
FIG. 1c is a schematic diagram of another relationship between spatial resolution and a pixel size according to this application;
FIG. 1d is a schematic diagram of angular resolution according to this application;
FIG. 1e is a schematic diagram of a location relationship between a meridian plane and a sagittal plane according to this application;
FIG. 1f is a schematic diagram of a numerical aperture according to this application;
FIG. 2 is a schematic diagram of a working principle of a detection module according to this application;
FIG. 3a is a schematic diagram of an application scenario according to this application;
FIG. 3b is a schematic diagram of a location of a lidar system on a vehicle according to this application;
FIG. 4 is a schematic diagram of a structure of a receiving optical system according to an embodiment of this application;
FIG. 5 is a schematic diagram of a structure of a cylindrical mirror according to this application;
FIG. 6a is a schematic diagram of a structure of a receiving module according to this application;
FIG. 6b is a schematic diagram of a structure of another receiving module according to this application;
FIG. 6c is a schematic diagram of a structure of still another receiving module according to this application;
FIG. 7 is a schematic diagram of a structure of yet another receiving module according to this application;
FIG. 8 is a schematic diagram of an optical path of an echo signal passing through a first stop according to this application;
FIG. 9a is a schematic diagram of a light spot energy distribution on a horizontal focal plane according to this application;
FIG. 9b is a schematic simulation diagram of a distribution result of energy of a spot according to this application;
FIG. 10a is a schematic diagram of a structure of another receiving optical system according to this application;
FIG. 10b is a schematic diagram of a structure of another receiving optical system according to this application;
FIG. 10c is a schematic diagram of a structure of another receiving optical system according to this application;
FIG. 10d is a schematic diagram of a structure of another receiving optical system according to this application;
FIG. 11 is a schematic diagram of an architecture of a lidar system according to an embodiment of this application;
FIG. 12 is a schematic diagram of a structure of a light source array according to this application;
FIG. 13 is a schematic diagram of a structure of a transmitting mirror group according to this application;
FIG. 14a is a schematic diagram of an architecture of another lidar system according to this application;
FIG. 14b is a schematic diagram of an architecture of another lidar system according to this application;
FIG. 15 is a diagram of an optical path passing through a scanning module according to this application;
FIG. 16 is a schematic diagram of a location of a lidar system on a vehicle according to this application; and
FIG. 17 is a schematic diagram of a structure of a terminal device according to this application.

### DESCRIPTION OF EMBODIMENTS

The following describes in detail embodiments of this application with reference to accompanying drawings.

The following describes some terms in this application. It should be noted that these explanations are intended for ease of understanding by a person skilled in the art, but do not constitute a limitation on the protection scope claimed in this application.

### 1. Binning (also referred to as merging)

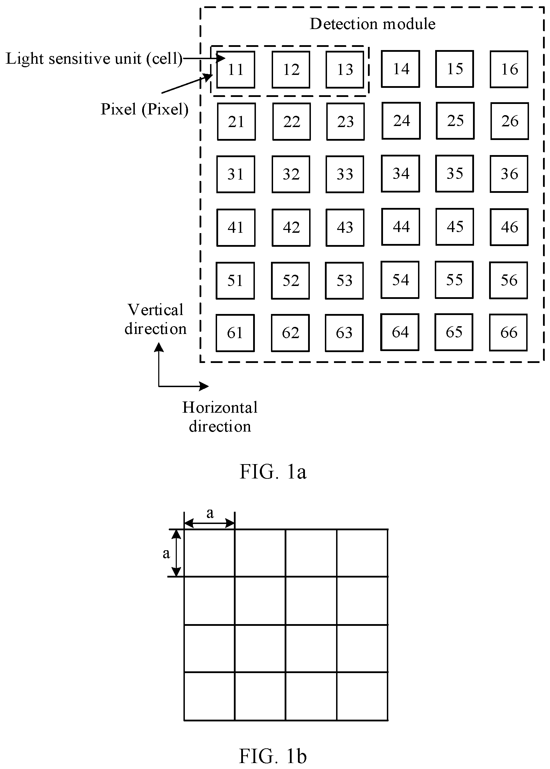

Binning is an image read manner. In this manner, signals (for example, photons) sensed by all light sensitive units in a merged light sensitive unit (or referred to as a pixel) (cell) are added together and read in a manner of one pixel (Pixel). Binning may be generally classified into horizontal (or referred to as transverse) binning and vertical (or referred to as longitudinal) binning. The horizontal binning is to superimpose signals of adjacent rows together and read the signals in a manner of one pixel (refer to FIG. 1a below), and the vertical binning is to superimpose signals of adjacent columns together and read the signals in a manner of one pixel. It should be understood that the binning manner may also be another possible manner, for example, binning along a diagonal direction. This is not limited in this application.

### 2. Dynamic range

A dynamic range is an important parameter of an optical system. For a detection module, the dynamic range usually means an interval between a value of a minimum signal that can be identified and a value of a maximum signal that can be identified. When the minimum signal that can be identified is fixed, a larger dynamic range indicates a larger value of the maximum signal that can be identified.

FIG. 1a is a schematic diagram of a structure of a detection module according to this application. An example in which the detection module includes 6×6 light sensitive units (cells) is used. In this example, that each cell is saturated when sensing two photons is used as an example. When cells are not merged, one cell is one pixel (Pixel). When one photon is emitted to one pixel, the pixel may output a signal 1; when two photons are simultaneously emitted to one pixel, the pixel outputs a signal 2; when six photons are simultaneously emitted to one pixel, the pixel also outputs the signal 2. Based on this, a dynamic range in which the detection module responds to an echo signal is 0 to 2.

For example, 1×3 cells are merged into one pixel, that is, one pixel includes 1×3 cells. When one photon is emitted to the pixel, the pixel may output the signal 1; when two photons are simultaneously emitted to the pixel, the pixel outputs the signal 2; and when three photons are simultaneously emitted to the pixel and the three photons cover at least two cells, the pixel outputs a signal 3. By analogy, when six photons are simultaneously emitted to the pixel and the six photons cover all cells, the pixel outputs a signal 6. Based on this, the dynamic range in which the detection module responds to an echo signal is 0 to 6.

### 3. Spatial resolution

Spatial resolution means a maximum quantity of pixels (Pixels) used for imaging on the detection module. Generally, a product of a quantity of pixels in a horizontal direction (a transverse direction) and a quantity of pixels in a vertical direction (or referred to as a longitudinal direction) is used to measure the spatial resolution, that is, Spatial resolution=Horizontal direction pixel quantity× Vertical direction pixel quantity.

With reference to FIG. 1a, if the light sensitive units are not merged, in FIG. 1a, Spatial resolution=6×6. If 1×3 cells are merged into one pixel (Pixel), in FIG. 1a, Spatial resolution=2×6.

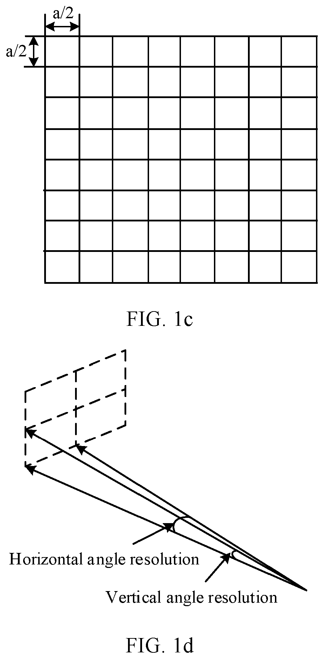

It should be noted that, when a light sensitive area (or referred to as a target surface or a photosensitive surface) of the detection module is fixed, the spatial resolution and a pixel size are inversely proportional. FIG. 1b and FIG. 1c show a relationship between a pixel size and spatial resolution in a same light sensitive area according to this application. In FIG. 1b, a pixel size is a, and spatial resolution is 4×4; and in FIG. 1c, a pixel size is a/2, and spatial resolution is 8×8. It may be determined from FIG. 1b and FIG. 1c that a smaller pixel size indicates higher spatial resolution, and a larger pixel size indicates lower spatial resolution.

### 4. Angular resolution

Angular resolution may also be referred to as scanning resolution, and is a minimum included angle between adjacent light beams emitted to a detection region. Smaller angular resolution indicates a larger quantity of light spots emitted to the detection region, that is, a larger quantity of points of a target that are in the detection region and that can be detected indicates higher detection definition. The angular resolution includes vertical angular resolution and horizontal angular resolution (refer to FIG. 1d).

### 5. Light spot

A light spot is usually a spatial energy distribution formed on a cross section (for example, a photosensitive surface of a detection module in this application) of a light beam. A shape of the light spot may be a rectangle, an ellipse, a circle, another possible regular or irregular shape, or the like. It should be noted that, a person skilled in the art can know that, in essence, the light spot is distributed with different intensity as a whole, an energy density of a core region is high, and a shape of the light spot is clear, while an edge part gradually extends outward, an energy density of the edge part is low, a shape of the edge part is unclear, the energy intensity gradually decreases, and a recognition degree of a light spot part near an edge is low. Therefore, a light spot with a specific shape in this application may be understood as a light spot that has an easily identifiable boundary and that is formed by a part with strong energy and a high energy density, and is not a whole of a light spot in a technical sense.

It should be understood that a boundary of a light spot is usually defined by using 1/e² of a maximum energy density.

### 6. Vertical focal plane and horizontal focal plane

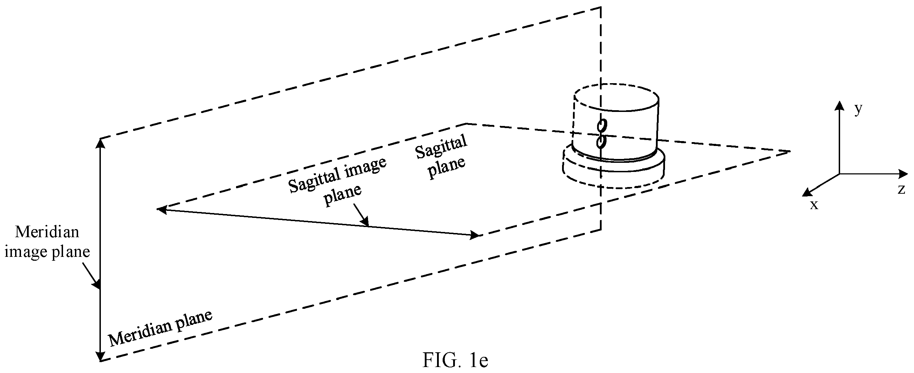

Refer to FIG. 1e. A meridian plane and a sagittal plane in this application are first defined. A meridian plane (or referred to as a vertical plane) in optics refers to a plane formed by a main light beam of an object point outside an axis and a main axis of an optical system, and is referred to as a meridian plane of imaging of the optical system. A light beam located in the meridian plane is referred to as a meridian light beam (or referred to as a vertical light beam), and a location at which the meridian light beam is focused is referred to as a meridian image plane (or referred to as a vertical focal plane or a vertical image plane). It may also be understood that an image formed by a meridian light beam is referred to as a meridian image point, and an image plane in which the meridian image point is located is referred to as a meridian image plane.

The sagittal plane (or referred to as a horizontal plane) is perpendicular to the meridian plane. A light beam located in the sagittal plane is referred to as a sagittal light beam (or referred to as a horizontal light beam), and a location at which the sagittal light beam is focused is referred to as a sagittal image plane (or referred to as a horizontal focal plane or a horizontal image plane). It may also be understood that an image formed by a sagittal light beam is referred to as a sagittal image point, and an image plane in which the sagittal image point is located is referred to as a sagittal image plane.

A direction corresponding to the meridian plane is referred to as a meridian direction (or referred to as a vertical direction), namely, a direction y in FIG. 1e; and a direction corresponding to the sagittal plane is a sagittal direction (or referred to as a horizontal direction), namely, a direction x in FIG. 1e. It may also be understood that a direction corresponding to the horizontal focal plane is the horizontal direction (the direction x), and a direction corresponding to the vertical focal plane is the vertical direction (the direction y).

It should be noted that, in FIG. 1e, an example in which an included angle between the meridian plane and the sagittal plane is equal to 90 is used. The included angle between the meridian plane and the sagittal plane may alternatively be less than 90 degrees or greater than 90 degrees, and an engineering error within a specific range is allowed.

### 7. Focal power (focal power)

A focal power equals to a difference between an image-side light beam convergence degree and an object-side light beam convergence degree, and represents an ability of deflecting light beams of an optical system. The focal power is usually represented by a letter φ. A refracted spherical focal power is φ=(n'-n)/r=n'/p'=-n/q, where n' indicates an image side refractive index, n indicates an object side refractive index, r indicates a sphere radius, p indicates an image distance, and q indicates an object distance. Generally, the focal power is expressed as a reciprocal of an image side focal length (a refractive index of air is approximately 1). A unit of the focal power is diopter (D). 1 diopter (D)=1m⁻¹.

Characteristics such as different thicknesses, uneven refractive indexes, and different curvatures of front and rear surfaces of an optical system or an optical element may cause a difference between an actual focal power of the optical system or the optical element and a theoretical focal power. Generally, the actual focal power is referred to as an equivalent focal power. In addition, an actual focal power in the meridian direction may be referred to as an equivalent focal power in the meridian direction (or an equivalent focal power in the vertical direction), and an actual focal power in the sagittal direction may be referred to as an equivalent focal power in the sagittal direction (or referred to as an equivalent focal power in the horizontal direction).

### 8. Numerical aperture (numerical aperture, NA)

A numerical aperture is a dimensionless number of an optical system, used to measure an angular range within which the optical system can collect light beams. In this application, the numerical aperture describes a size of an acceptance angle of a receiving optical system, and the numerical aperture affects spatial resolution of the receiving optical system. It should be understood that a larger numerical aperture indicates higher spatial resolution of the receiving optical system.

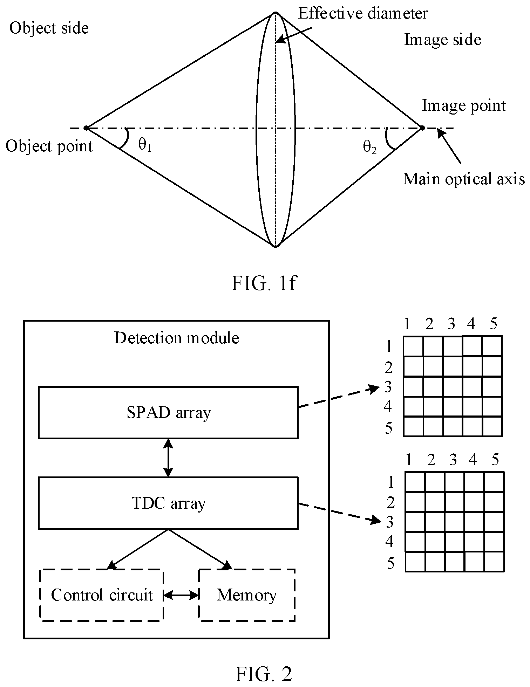

The numerical aperture may include an image side numerical aperture and an object side numerical aperture. Refer to FIG. 1f. A lens is used as an example of a receiving optical system. Object side numerical aperture=*n*₁×sin *θ*₁, and *θ*₁ is half of an aperture angle. The aperture angle is an angle formed by an object point on an optical axis of the lens and an effective diameter of the lens, and *n*₁ is a refractive index of a medium between an object and the lens. Image side numerical aperture=*n*₂×sin *θ*₂, and *θ*₂ is half of an aperture angle. The aperture angle is an angle formed by an image point on the optical axis of the lens and the effective diameter of the lens, and *n*₂ is a refractive index of a medium between an image and the lens.

The foregoing describes some terms in this application, and the following describes technical features in this application. It should be noted that these explanations are intended for ease of understanding by a person skilled in the art, but do not constitute a limitation on the protection scope claimed in this application.

FIG. 2 is a schematic diagram of a working principle of a possible detection module according to this application. The detection module may include a single-photon avalanche diode (single-photon avalanche diode, SPAD) array and a time-to-digital converter (time to digital convert, TDC) array. In this example, an SPAD array is a 5×5 array, and the TDC array is also a 5×5 array. One TDC corresponds to at least one SPAD. The SPAD has sensitivity to detect a single photon. In a working state, the SPAD is a diode that biases a high reverse voltage. A reverse bias voltage forms a strong electric field inside a component. When a photon is absorbed by the SPAD and converted into a free electron, the free electron is accelerated by the internal electric field to obtain enough energy to impact other atoms and generate electron-hole pairs. Newly produced carriers continue to be accelerated by the electric field, and the impact produces more carriers. This avalanche effect of geometric amplification makes the SPAD have almost infinite gains, and the SPAD outputs a large current pulse to detect a single photon.

After detecting a moment of starting to transmit signal light, a TDC starts timing, and after one SPAD in at least one SPAD corresponding to the TDC that starts timing receives one photon, the TDC stops timing. Based on this, a time difference between transmitting and receiving of the signal light may be detected, and a flight time of the signal light may be obtained. Further, distance information of a target may be determined based on the flight time. For example, d=C×t/2, where d indicates a target distance, C indicates the speed of light, and t indicates a flight time.

Further, optionally, the detection module may further include a memory and/or a control circuit. The control circuit may store, in the memory, the flight time of the signal light detected by using the SPAD/TDC.

Based on the foregoing content, the following shows some possible application scenarios of this application as examples.

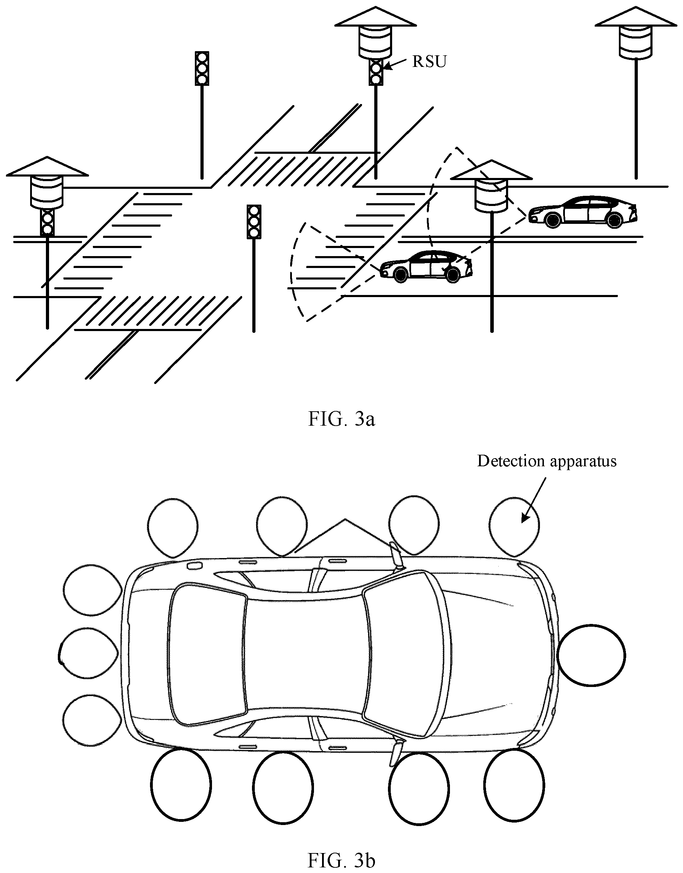

FIG. 3a is a schematic diagram an example of a possible application scenario of this application. In this application scenario, an example in which a receiving optical system is applied to a lidar system, the lidar system is installed on a vehicle, and the vehicle travels on a road is used. The vehicle may be, for example, an unmanned vehicle, an intelligent vehicle, an electric vehicle, or a digital vehicle. The lidar system may be deployed at various locations of the vehicle (refer to FIG. 3b). For example, the lidar system may be deployed in any one or more directions of four directions: front, rear, left, and right of the vehicle, to capture information about an environment around the vehicle. In FIG. 3a, an example in which the lidar system is deployed in the front of the vehicle is used. The lidar system may sense a sector region shown in a dashed-line box shown in FIG. 3a, and the sector region may be referred to as a detection region of the lidar system.

In a possible implementation, the lidar system may obtain, in real time or periodically, latitude and longitude, a speed, and an orientation of the vehicle, or association information (for example, a distance of a target, a moving speed of the target, a posture of the target, or a grayscale image of the target) of the target (for example, another surrounding vehicle) in a specific range. The lidar system or the vehicle may determine a location and/or path planning of the vehicle, or the like, based on the association information. For example, a location of the vehicle is determined based on the longitude and the latitude. Alternatively, a traveling direction and a destination of the vehicle in a future period of time are determined based on the speed and the orientation. Alternatively, a quantity of obstacles around the vehicle, density of the obstacles, and the like are determined based on the distance to the surrounding object. Further, optionally, assisted driving, autonomous driving, or the like of the vehicle may be implemented with reference to a function of an advanced driving assistance system (advanced driving assistance system, ADAS). It should be understood that a principle of detecting the association information of the target by the lidar system is as follows: The lidar system transmits the signal light in a specific direction. If the target exists in the detection region of the lidar system, the target may reflect received signal light back to the lidar system (the reflected signal light may be referred to as an echo signal), and then the lidar system determines the association information of the target based on the echo signal.

It should be noted that the foregoing application scenario is merely an example. The lidar system (the lidar system includes the receiving optical system provided in this application) provided in this application may be further applied to a plurality of other possible scenarios, and is not limited to the scenario shown in the foregoing example. For example, the lidar system may alternatively be installed on an unmanned aerial vehicle as an airborne radar. For another example, the lidar system may alternatively be installed in a road side unit (road side unit, RSU), and may be used as a roadside traffic lidar system, to implement intelligent vehicle-road synergy communication. For another example, the lidar system may be installed on an automatic guided vehicle (automated guided vehicle, AGV), where the AGV is a transport vehicle that is equipped with an automatic navigation apparatus such as electromagnetic or optical devices and that is capable of traveling along a specified navigation path, and has safeguards and wide-ranging transportation functions. Details are not listed one by one herein. It should be understood that, the application scenarios described in this application are intended to describe the technical solutions in this application more clearly, but constitute no limitation on the technical solutions provided in this application. A person of ordinary skill in the art may learn that the technical solutions provided in this application are also applicable to a similar technical problem as a new application scenario emerges.

Based on the foregoing content, the application scenario may be applied to fields such as unmanned driving, automatic driving, assisted driving, intelligent driving, networked vehicles, security monitoring, remote interaction, mapping, or artificial intelligence.

As described in the background, a detection module obtained after cells are merged has a capability of improving a dynamic range. However, if some cells in the pixel cannot receive signal light, the dynamic range in which a lidar system responds to an echo signal still cannot be effectively improved. Refer to FIG. 1a. 1×3 cells are merged into one pixel, that is, one pixel includes 1×3 cells. When a light spot emitted to each pixel cannot cover three cells that are merged into one pixel, although the pixel has a capability of implementing a high dynamic range, because the light spot emitted to each pixel is small, a dynamic range of the detection module still cannot be effectively improved during actual application.

In view of this, this application provides a receiving optical system. The receiving optical system can extend a light spot emitted to a detection module, so that a dynamic range in which the detection module responds to an echo signal can be effectively improved.

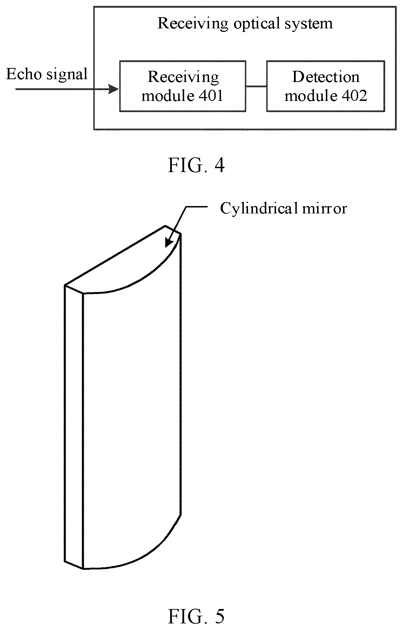

Based on the foregoing content, the following specifically describes the receiving optical system provided in this application with reference to FIG. 4 to FIG. 10d.

FIG. 4 is a schematic diagram of a structure of a receiving optical system according to this application. The receiving optical system may include a receiving module 401 and a detection module 402. The receiving module 401 is configured to: receive an echo signal, separate a horizontal focal plane from a vertical focal plane of the echo signal, and propagate the echo signal to the detection module 402. The echo signal is obtained after signal light emitted to a detection region is reflected by a target in the detection region. It may also be understood that after the echo signal is propagated by the receiving module 401, the vertical focal plane is separated from the horizontal focal plane. The detection module 402 is configured to perform optical-electrical conversion on the echo signal, to obtain an electrical signal, where the electrical signal is used to determine association information of the target.

The detection module may be located on the horizontal focal plane or the vertical focal plane. That the detection module is located on the horizontal focal plane means that a light-sensitive surface (or referred to as a photosensitive surface) of the detection module coincides with the horizontal focal plane, and that the detection module is located on the vertical focal plane means that a light-sensitive surface (or referred to as a photosensitive surface) of the detection module coincides with the vertical focal plane. Further, optionally, an included angle between two adjacent sides of the photosensitive surface of the detection module is Φ, and an included angle between the horizontal focal plane and the vertical focal plane is also Φ. If Φ=90°, the horizontal focal plane and the vertical focal plane are perpendicular to each other. If Φ is greater than 90°, the included angle between the horizontal focal plane and the vertical focal plane is greater than 90°. If Φ is less than 90°, the included angle between the horizontal focal plane and the vertical focal plane is less than 90°.

In a possible implementation, the association information of the target includes but is not limited to distance information of the target, an orientation of the target, a speed of the target, and/or grayscale information of the target.

Based on the foregoing receiving optical system, because the receiving module separates the horizontal focal plane from the vertical focal plane of the echo signal, that is, the vertical focal plane and the horizontal focal plane of the echo signal that are emitted to the detection module through the receiving module are separated. The vertical focal plane and the horizontal focal plane of the echo signal are separated, so that a light spot of the echo signal received by the detection module is diffused in a direction corresponding to at least one focal plane, the light spot in the dispersion direction may cover a large light sensitive area of the detection module. When strength of the echo signal received by the detection module is fixed, because the echo signal may cover the large light sensitive area, it is equivalent to that a quantity of photons detected in a unit light sensitive area is reduced, so that an anti-saturation capability of the unit light sensitive area can be improved, that is, an echo signal of higher strength can be detected in a unit area. In other words, the light spot in the dispersion direction may cover a large light sensitive area. If the large light sensitive area is saturated, a higher-strength echo signal is required. Based on this, a dynamic range in which the detection module responds to an echo signal can be improved.

When the detection module is located on the vertical focal plane, a light spot of an echo signal received by the detection module is focused in a direction corresponding to the vertical focal plane, and is diffused in a direction corresponding to the horizontal focal plane. When the detection module is located on the horizontal focal plane, a light spot of an echo signal received by the detection module is focused in a direction corresponding to the horizontal focal plane, and is diffused in a direction corresponding to the vertical focal plane. The light spot in the dispersion direction may cover a large light sensitive area of the detection module. Therefore, a quantity of photons received in a unit light sensitive area is reduced, so that a higher-strength echo signal can be detected in the unit light sensitive area. This helps improve the dynamic range in which the detection module responds to an echo signal. Further, when the detection module is located on the vertical focal plane, the light spot of the echo signal received by the detection module is focused in the direction corresponding to the vertical focal plane, that is, a size of the light spot in the direction corresponding to the vertical focal plane does not change, so that spatial resolution in the direction corresponding to the vertical focal plane is not affected. Similarly, when the detection module is located on the horizontal focal plane, the light spot of the echo signal received by the detection module is focused in the direction corresponding to the horizontal focal plane, that is, a size of the light spot in the direction corresponding to the horizontal focal plane does not change. Therefore, spatial resolution in the direction corresponding to the horizontal focal plane is not affected. Further, when the receiving optical system is applied to strong background stray light, because the dynamic range in which the detection module responds to an echo signal is high, it is difficult for the strong background stray light to cause saturation of the detection module (that is, a threshold for receiving stray light by the receiving optical system is increased). This helps improve a capability of the receiving optical system to resist background stray light, and further improve a ranging capability of the detection module under strong background stray light.

The following separately describes the functional modules shown in FIG. 4, to provide an example of a specific implementation. For ease of description, neither a receiving module nor a detection module in the following is identified.

### 1. Receiving module

In a possible implementation, the receiving module is configured to: receive an echo signal, separate a horizontal focal plane from a vertical focal plane of the received echo signal, and propagate the echo signal to the detection module.

In a possible implementation, the receiving module may include a receiving mirror group and a focal power element. A horizontal equivalent focal power and a vertical equivalent focal power of the focal power element are different. An echo signal passing through the focal power element is focused on the horizontal focal plane and the vertical focal plane separately, and the horizontal focal plane is separated from the vertical focal plane (refer to FIG. 1e). It should be noted that a difference between the horizontal equivalent focal power and the vertical equivalent focal power is small. In addition, the horizontal equivalent focal power means an equivalent focal power in a corresponding direction (for example, the direction x in FIG. 1e) parallel to the horizontal focal plane, and the vertical equivalent focal power means an equivalent focal power in a corresponding direction (for example, the direction y in FIG. 1e) parallel to the vertical focal plane.

Further, optionally, the focal power element may be a one-dimensional focal power element. The one-dimensional focal power element refers to an optical element whose focal power is not 0 in one dimension and is 0 in another dimension. For example, the one-dimensional focal power element may be an optical element whose horizontal focal power is 0 and whose vertical focal power is not 0, or an optical element whose horizontal focal power is not 0 and whose vertical focal power is 0. For example, the one-dimensional focal power element includes at least one or more of a one-dimensional cylindrical mirror, a one-dimensional wedge, or a one-dimensional grating. The one-dimensional cylindrical mirror is, for example, a one-dimensional cylindrical lens or a one-dimensional cylindrical reflection mirror. A reflective surface of the cylindrical reflection mirror is a cylindrical surface, and the reflective surface may be a surface coated with a reflective film. The reflective film includes but is not limited to a common protective aluminum film, a protective ultraviolet reflective aluminum film, a protective silver film, a protective gold film, and the like.

Alternatively, the focal power element may be a two-dimensional focal power element. The two-dimensional focal power element refers to an optical element whose equivalent focal powers in two dimensions are not 0 and are different. For example, the two-dimensional focal power element may be an element whose vertical focal power is not 0 and whose horizontal focal power is not 0 either. For example, the two-dimensional focal power element may be a lens, a reflection mirror, or a combination of a lens and a reflection mirror. Specifically, the two-dimensional focal power element includes but is not limited to at least one or a combination of a ring mirror, a two-dimensional cylindrical mirror, a saddle mirror, a two-dimensional grating, or a two-dimensional wedge. The annular mirror includes an annular reflection mirror or an annular transmission mirror, and the two-dimensional cylindrical mirror includes a two-dimensional cylindrical emission mirror or a two-dimensional cylindrical transmission mirror.

It should be understood that the focal power element provided above is merely an example. A specific form of the focal power element is not limited in this application, and any optical device that can separate a horizontal focal plane from a vertical focal plane of an echo signal may be used.

It should be noted that the one-dimensional focal power element may include one or more one-dimensional cylindrical mirrors and/or one-dimensional wedges and/or one-dimensional gratings. This is not limited in this application. In addition, the two-dimensional focal power element may include one or more annular mirrors and/or two-dimensional cylindrical mirrors and/or saddle mirrors and/or two-dimensional gratings and/or two-dimensional wedges. This is not limited in this application.

In a possible implementation, both surfaces of the focal power element may be curved surfaces, or one surface may be a curved surface, and the other surface may be a plane. Which surface of the focal power element is a curved surface is not limited in this application. When the focal power element is a one-dimensional cylindrical mirror or a two-dimensional cylindrical mirror, one surface of the cylindrical mirror may be a concave surface, and the other surface may be a plane. Such a cylindrical mirror may be referred to as a flat concave cylindrical mirror. Alternatively, one surface of the cylindrical mirror may be a convex surface, and the other surface is a plane. Such a cylindrical mirror may be referred to as a flat convex cylindrical mirror. Alternatively, both surfaces of the cylindrical mirror may be concave surfaces, and such a cylindrical mirror may be referred to as a double concave cylindrical mirror. Alternatively, both surfaces of the cylindrical mirror may be convex surfaces, and such a cylindrical mirror may be referred to as a double convex cylindrical mirror. Alternatively, one surface of the cylindrical mirror may be a concave surface and the other surface is a convex surface. Such a cylindrical mirror may be referred to as a concave convex cylindrical mirror or a convex concave cylindrical mirror. A specific shape of the cylindrical mirror is not limited in this application.

FIG. 5 is a schematic diagram of a structure of a cylindrical mirror according to this application. A horizontal equivalent focal power of the cylindrical mirror is *r₁,* and a vertical equivalent focal power is *r₂.* When *r₂<r₁,* a light beam in a direction corresponding to the horizontal focal power is first focused, and a light beam in a direction corresponding to the vertical focal plane is then focused. That is, when *r₂<r₁,* in a direction from an object side to an image side of a receiving mirror group, the horizontal focal plane is closer to the object side than the vertical focal plane, in other words, the vertical focal plane is closer to the image side than the horizontal focal plane. Herein, |*r₂-r₁*|<<*r₂.* If *r₁* is a negative number, it indicates a concave surface. If *r₂* is a positive number, it indicates a convex surface. It should be understood that FIG. 5 is described by using an example in which the cylindrical mirror is a flat convex cylindrical mirror.

Further, optionally, a material of a focal power element may be an optical material such as glass, resin, or crystal. When the material of the focal power element is resin, a mass of a receiving optical system can be reduced. When the material of the focal power element is glass, this helps improve imaging quality of the receiving optical system.

Based on the foregoing focal power element, for example, the following shows two structures of a receiving module that can separate a horizontal focal plane from a vertical focal plane of an echo signal.

Structure 1. A receiving module includes a first receiving mirror group and a focal power element.

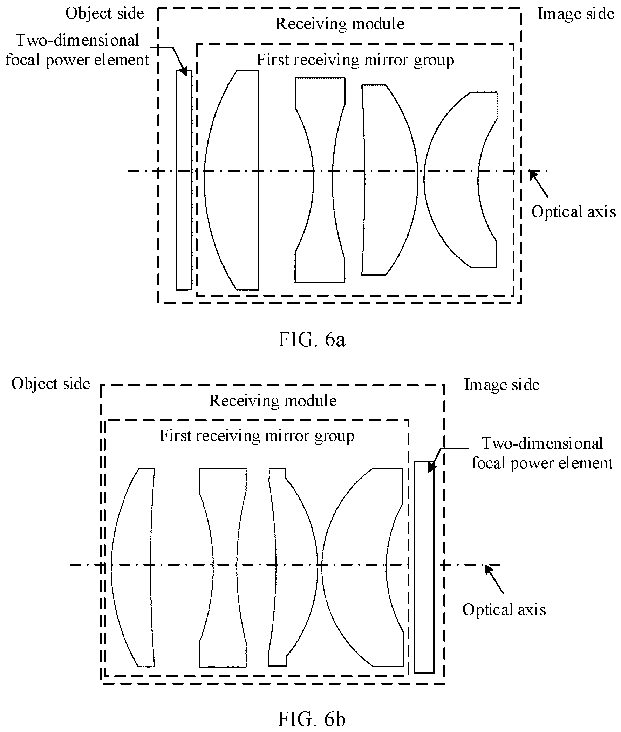

FIG. 6a is a schematic diagram of a structure of a receiving module according to this application. The receiving module includes a first receiving mirror group and a focal power element. The focal power element is located on an object side of the first receiving mirror group, and a horizontal equivalent focal power and a vertical equivalent focal power of the focal power element are different. It may also be understood that the receiving module sequentially includes the focal power element and the first receiving mirror group along a direction from an object side to an image side along an optical axis of the receiving module. In this example, the first receiving mirror group includes four lenses, and the focal power element is a cylindrical mirror. The first receiving mirror group is configured to converge an echo signal from a detection region to a detection module as much as possible. The focal power element is configured to separate a horizontal focal plane and a vertical focal plane of an echo signal. It should be understood that the optical axis of the receiving module is a straight line that passes through a center of the first receiving mirror group and a center of the focal power element.

In a possible implementation, a surface that is of the focal power element and that is close to the first receiving mirror group is a curved surface, and a surface that is away from the first receiving mirror group and that is close to the detection region is a plane. Alternatively, a surface that is of the focal power element and that is close to the first receiving mirror group is a plane, and a surface that is away from the first receiving mirror group and that is close to the detection region is a curved surface. Alternatively, both surfaces of the focal power element are curved surfaces, and a horizontal equivalent focal power is different from a vertical equivalent focal power. Which surface of the focal power element is a curved surface is not limited in this application.

It should be noted that the first receiving mirror group may be a rotationally symmetric receiving mirror group. The rotational symmetry means that the first receiving mirror group is rotationally symmetric around an optical axis of the first receiving mirror group. For example, a receiving mirror in the first receive lens group may be a monolithic spherical lens, or may be a combination of a plurality of spherical lenses (for example, a combination of concave lenses, a combination of convex lenses, or a combination of a convex lens and a concave lens). It should be understood that convex lenses and concave lenses have a plurality of different types. For example, convex lenses include a biconvex lens, a planoconvex lens, and a concavo-convex lens, and concave lenses include a biconcave lens, a planoconcave lens, and a concavo-convex lens. With reference to FIG. 6a, when the first receiving mirror group is a rotationally symmetric receiving mirror group, the first receiving mirror group is the same as the figure shown in FIG. 6a after being rotated 90° around the optical axis of the first receiving mirror group. Alternatively, the first receiving mirror group may be a non-rotationally symmetric receiving mirror group. For example, the receiving mirror in the first receiving mirror group may be a monolithic aspherical lens, or may be a combination of a plurality of aspherical lenses. A combination of a plurality of spherical lenses or aspherical lenses helps improve imaging quality of a receiving optical system and reduce aberration of an optical imaging system.

It should be understood that the first receiving mirror group may further include a reflection mirror and the like. This is not limited in this application. Any structure in which an echo signal can be focused on a detection module and a horizontal focal plane and a vertical focal plane of the echo signal can be separated may be used.

In a possible implementation, a material of the receiving mirror in the first receiving mirror group may be an optical material such as glass, resin, or crystal. When the material of the receiving mirror is resin, this helps reduce the mass of the receiving optical system. When the material of the receiving mirror is glass, this helps further improve imaging quality of the receiving optical system. Further, to effectively suppress a temperature drift, the first receiving mirror group includes at least one receiving mirror made of a glass material. It should be understood that when the first receiving mirror group includes at least three receiving mirrors, a material of some receiving mirrors may be resin, a material of some receiving mirrors may be glass, and a material of some receiving mirrors may be crystal.

The following shows, as an example, four possible implementations in which the focal power element is located on the object side of the first receiving mirror group.

Implementation 1: The focal power element is disposed on an inner surface of a window.

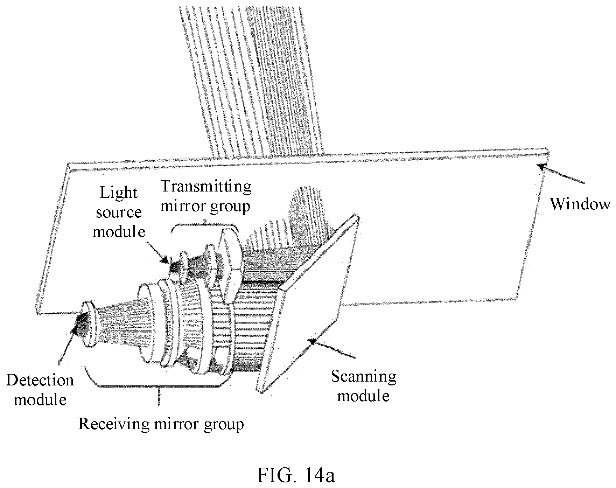

To prevent the receiving optical system from being polluted by light of an external environment, the receiving optical system may be isolated from the external environment by using a window (a material may be glass, and reference may be made to FIG. 14a). In a possible implementation, the focal power element may be disposed (for example, bonded) on an inner surface of the glass window (namely, a surface close to the receiving optical system or referred to as a surface away from the external environment).

Implementation 2: The focal power element may alternatively be disposed on any surface of a light filter.

In a possible implementation, the receiving optical system may further include an optical filter. Before an echo signal is output to a receiving module, to prevent an invalid photon outside a spectrum corresponding to the echo signal from interfering with detection of the echo signal by the detection module, the invalid photon may be first filtered out by using the optical filter. The focal power element may be disposed (for example, bonded) on any surface of the light filter.

Implementation 3: The focal power element is disposed on the 1^{st} receiving mirror that is of the first receiving mirror group and that is close to the object side.

In a possible implementation, the focal power element may be disposed (for example, bonded) on the 1^{st} receiving mirror that is in the first receiving mirror group and that is close to the object side.

Implementation 4: The focal power element is disposed independently.

In a possible implementation, the focal power element may alternatively be independently disposed on the object side of the first receiving mirror group. It should be understood that FIG. 6a is an example of the implementation 4.

FIG. 6b is a schematic diagram of a structure of another receiving module according to this application. The receiving module includes a first receiving mirror group and a focal power element. The focal power element is located on an image side of the first receiving mirror group. Specifically, the focal power element is located between the first receiving mirror group and a detection module, and a horizontal equivalent focal power and a vertical equivalent focal power of the focal power element are different. It may also be understood that the receiving module sequentially includes the first receiving mirror group and the focal power element along a direction from an object side to the image side along an optical axis of the receiving module. For possible implementations of the first receiving mirror group and the focal power element, refer to related descriptions. Details are not described herein again.

The following shows, as an example, two possible implementations in which the focal power element is located between the first receiving mirror group and the detection module.

Implementation 1: The focal power element is disposed on the 1^{st} receiving mirror that is in the first receiving mirror group and that is close to the image side.

In a possible implementation, the focal power element may be disposed (for example, bonded) on the 1^{st} receiving mirror that is in the first receiving mirror group and that is close to the image side.

Implementation 2: The focal power element is independently disposed between the first receiving mirror group and the detection module.

In a possible implementation, the focal power element may alternatively be independently disposed between the first receiving mirror group and the detection module. It should be understood that FIG. 6b is an example of the implementation 2.

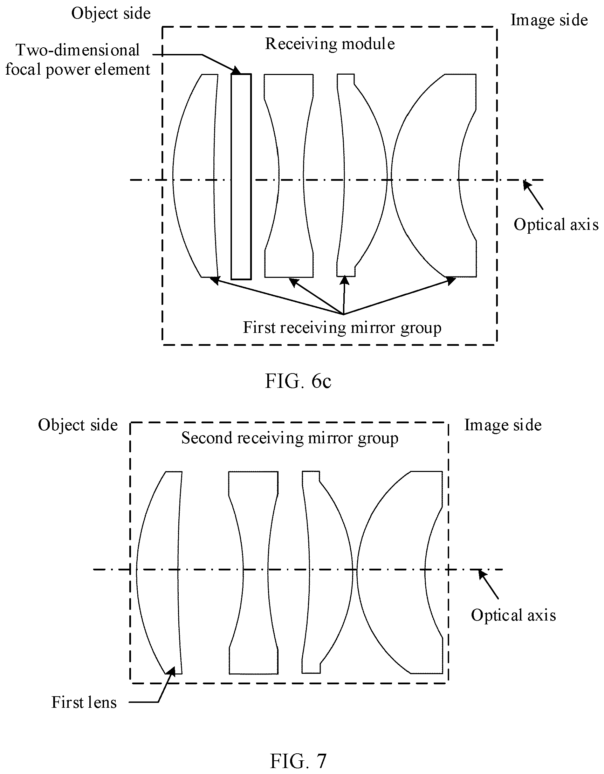

FIG. 6c is a schematic diagram of a structure of another receiving module according to this application. The receiving module includes a first receiving mirror group and a focal power element. The focal power element is located between any two adjacent receiving mirrors in the first receiving mirror group, and a horizontal equivalent focal power and a vertical equivalent focal power of the focal power element are different. FIG. 6c is an example in which the focal power element is disposed between the 1^{st} lens and the 2^{nd} lens from an object side to an image side along an optical axis of the receiving module. For possible implementations of the first receiving mirror group and the focal power element, refer to the description in FIG. 6a. Details are not described herein again.

In a possible implementation, the focal length element may be independently disposed between any two adjacent receiving mirrors in the first receiving mirror group (as shown in FIG. 6c), or may be bonded to a surface that is close to an image side of the 1^{st} receiving mirror that is on the object side and that is in the first receiving mirror group, or may be bonded to a surface that is close to an object side of the 1^{st} receiving mirror that is on the image side.

It should be noted that a quantity of receiving mirrors included in the first receiving mirror group shown in FIG. 6a, FIG. 6b, or FIG. 6c is merely an example. In this application, the first receiving mirror group may include more or fewer receiving mirrors than those in FIG. 6a, FIG. 6b, or FIG. 6c. In addition, in the receiving module shown in FIG. 6c, the first receiving mirror group includes at least two receiving mirrors.

Structure 2. The receiving module includes a second receiving mirror group.

In a possible implementation, the second receiving mirror group includes at least one first lens, and a horizontal equivalent focal power and a vertical equivalent focal power of the first lens are different. It should be noted that the first lens may be the 1^{st} lens that is in the second receiving lens group and that is close to the object side, or may be the 1^{st} lens that is in the second receiving lens group and that is close to the image side, or may be any lens in the middle. A location of the first lens is not limited in this application.

Further, optionally, the first lens includes a first surface and a second surface. In this example, a surface facing the object side is referred to as the first surface, and a surface facing the image side is referred to as the second surface. The following example shows a possible implementation in which a horizontal equivalent focal power and a vertical equivalent focal power of the first lens are different. For example, a horizontal focal power and a vertical focal power of the first surface are different, and a horizontal focal power a vertical focal power of the second surface are the same. For another example, a horizontal focal power and a vertical focal power of the first surface are the same, and a horizontal focal power and a vertical focal power of the second surface are different. For another example, a horizontal focal power and a vertical focal power of the first surface are different, a horizontal focal power and a vertical focal power of the second surface are also different, and the horizontal equivalent focal power and the vertical equivalent focal power that are obtained based on the focal power of the two surfaces are different.

It should be noted that the second receiving mirror group may be a rotationally symmetric receiving mirror group. The rotational symmetry means that the second receiving mirror group is rotationally symmetric around an optical axis of the second receiving mirror group. For example, the receiving mirror in the second receiving mirror group may be a monolithic spherical lens, or may be a combination of a plurality of spherical lenses. Alternatively, the second receiving mirror group may be a non-rotationally symmetric receiving mirror group. For example, the receiving mirror in the second receiving mirror group may be a monolithic aspherical lens, or may be a combination of a plurality of aspherical lenses. A combination of a plurality of spherical lenses and/or aspherical lenses helps improve imaging quality of a receiving optical system and reduce aberration of an optical imaging system.

For example, a material of the receiving mirror in the second receiving mirror group may be an optical material such as glass, resin, or crystal. It should be understood that when the second receiving mirror group includes at least two receiving mirrors (the at least two receiving mirrors include the first lens), a material of some receiving mirrors may be glass, a material of some receiving mirrors may be resin, and a material of some receiving mirrors may be an optical material such as crystal.

In a possible implementation, the second receiving mirror group may be understood as replacing at least one receiving mirror in the first receiving mirror group with the first lens. In other words, the second receiving mirror group may be understood as that a horizontal equivalent focal power and a vertical equivalent focal power of at least one receiving mirror in the first receiving mirror assembly are different.

In another possible implementation, the first lens in the second receiving lens group is the focal power element in the foregoing structure 1.

FIG. 7 is a schematic diagram of a structure of still another receiving module according to this application. The receiving module is described by using an example in which the 1^{st} receiving mirror that is close to an object side and that is in a second receiving mirror group is a first lens. A horizontal equivalent focal power of the first lens is (r+δr), a vertical equivalent focal power is r, and |δr|<<|r|. The first lens may be understood as increasing a horizontal equivalent focal power of the 1^{st} receiving mirror that is close to the object side and that is in a first receiving mirror group by δr. Alternatively, a horizontal equivalent focal power of the first lens is r, and a vertical equivalent focal power of the first lens is (r+δr), where |δr|<<|r|. The first lens may be understood as increasing the vertical equivalent focal power of the 1^{st} receiving mirror that is close to the object side and that is in the first receiving mirror group by δr.

By using the receiving module shown in the foregoing structure 2, a horizontal focal plane and a vertical focal plane of an echo signal can be separated while a size of a receiving optical system is reduced as much as possible.

It should be noted that the structure of the receiving module provided in the foregoing example is merely an example. Based on the foregoing structure 1, the receiving module may alternatively include only the focal power element. Based on the foregoing structure 2, the receiving module may alternatively include only the first lens.

### 2. Detection module

The following describes the following two possible cases based on that the detection module is located on a horizontal focal plane or a vertical focal plane.

Case 1: The detection module is located on the vertical focal plane.

Based on the case 1, a horizontal equivalent focal power of the focal power element is greater than a vertical equivalent focal power. It may be understood that, based on a receiving module including the focal power element, a horizontal focal plane and a vertical focal plane of an echo signal may be separated, and a light beam in a direction corresponding to the horizontal focal plane is first focused, and a light beam in a direction corresponding to the vertical focal plane is then focused, that is, in a direction from an object side to an image side along an optical axis of the receiving module, the horizontal focal plane is closer to the object side than the vertical focal plane, that is, the vertical focal plane is closer to the image side than the horizontal focal plane. At a location of the vertical focal plane, a light beam in the direction corresponding to the horizontal focal plane is diffused. Therefore, when the detection module is located on the vertical focal plane, a light spot of a received echo signal is diffused (or referred to as broadened) in the direction corresponding to the horizontal focal plane.

In order to reduce the effect of background stray light on the echo signal, a first stop may be placed on the horizontal focal plane. To enable an echo signal from a detection region to be output to the detection module as much as possible, a shape of the first stop may be the same as a shape of a light spot of the echo signal from the detection region, and the shape of the light spot of the echo signal from the detection region is the same as a shape of a light spot of signal light. For example, the shape of the light spot of the signal light may be a rectangle. Correspondingly, the shape of the first stop may also be a rectangle. For another example, the shape of the light spot of the signal light may be an ellipse. Correspondingly, the shape of the first stop may also be an ellipse. For another example, the shape of the light spot of the signal light may be a circle. Correspondingly, the shape of the first stop may also be a circle. A shape of the first stop is not limited in this application, and the foregoing is merely an example for ease of understanding of the solution. It should be noted that the receiving optical system may include at least one first stop.

It should be understood that a shape of the first stop may be different from a shape of a light spot of an echo signal. For example, the shape of the first stop may alternatively be another regular shape, for example, a quadrilateral, or may be another irregular shape, or may be a rectangle formed by a plurality of spaced holes (a shape of the holes may be a rectangle, a circle, a square, an ellipse, or the like). The shape of the first stop is not limited in this application.

For ease of description of the solution, the following uses an example in which the shape of the first stop is a rectangle for description.

In a possible implementation, a short side of the first stop is parallel to the direction corresponding to the horizontal focal plane, and a long side of the first stop is parallel to the direction corresponding to the vertical focal plane. Further, optionally, to reduce impact of background stray light on an echo signal as much as possible without losing the echo signal, a length L₁ of a short side of the first stop meets: *L₁*=*α*₁×*f₁.* Herein, *α*₁ represents horizontal angular resolution of the receiving optical system, and *f₁* represents an equivalent focal length *f₁* in a direction corresponding to a horizontal focal plane of the receiving optical system.

It should be understood that the length L₁ of the short side of the first stop may alternatively meet: *L₁*>*α*₁ ×*f₁.* For example, the length of the short side of the first stop is L₁=n₁×*α*₁×*f₁,* and n₁ may be a number greater than 1, such as 1.2, 1.5, or 2. For another example, the length L₁ of the short side of the first stop may alternatively meet: L₁=*α*₁×*f₁*+First threshold. In addition, the length L₁ of the short side of the first stop may alternatively meet: *L₁<α*₁×*f₁.* For example, the length of the short side of the first stop is L₁=n₃×*α*₁×*f₁,* and n₃ may be a number less than 1, such as 0.9, 0.85, or 0.8. For another example, the length L₁ of the short side of the first stop may alternatively meet: L₁=*α*₁×*f₁*-Second threshold. It should be noted that both the first threshold and the second threshold are numbers greater than 0, and the first threshold and the second threshold may be the same or may be different. This is not limited in this application. When the length L₁ of the short side of the first stop meets L₁>α₁×f₁, utilization of the echo signal can be improved as much as possible. When the length L₁ of the short side of the first stop meets L₁<*α*₁×f₁, background spurious light can be suppressed as much as possible from being emitted to the detection module.

Further, optionally, a length L₂ of a long side of the first stop meets: L₂≥*ψ*₁×*f₂*, where *ψ*₁ represents a vertical angle of view of the receiving optical system, and *f₂* represents an equivalent focal power in a direction corresponding to the vertical focal plane of the receiving optical system. When L₂≥*ψ*₁×*f₂,* an echo signal in a direction corresponding to the vertical focal plane can be output to the detection module as much as possible, thereby improving echo signal utilization. It should be noted that the vertical angle of view of the receiving optical system is a maximum angle that can be detected by the receiving optical system in the direction corresponding to the vertical focal plane.

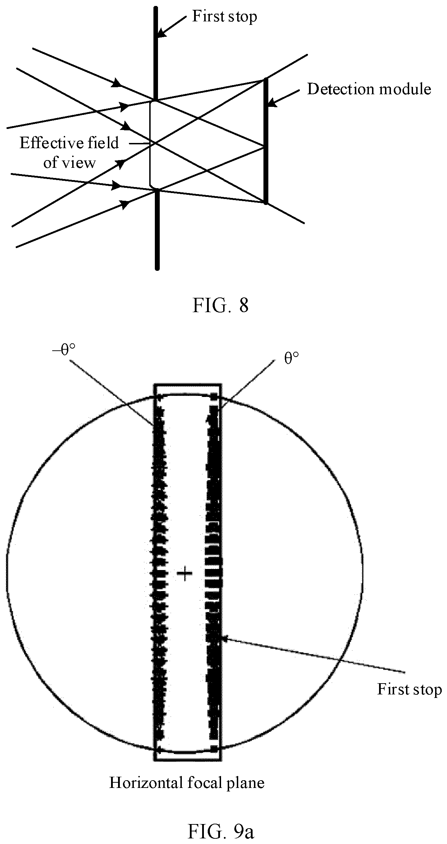

Based on the first stop, an echo signal in an effective field of view (namely, a field of view corresponding to the short side of the first stop) in the direction corresponding to the horizontal focal plane may be allowed to pass through, and background stray light outside the effective field of view may be suppressed (or referred to as blocked) (refer to FIG. 8), thereby helping reduce stray light emitted to the detection module.

It should be noted that, a specific engineering error is allowed for both the length L₁ of the short side and the length L₂ of the long side of the first stop.

Generally, the first stop is parallel to a photosensitive surface of the detection module, that is, an included angle between the first stop and the photosensitive surface of the detection module is equal to 0 degrees. Based on this, the length L₁ of the short side of the first stop meets *L₁*=*α*₁×*f₁*, and the length L₂ of a long side of the first stop meets L₂≥*ψ*₁×*f₂*. When the included angle between the first stop and the photosensitive surface of the detection module is not equal to 0 degrees, to reduce impact of background stray light on signal light as much as possible, a component *Lₓ* of the short side of the first stop in the direction corresponding to the horizontal focal plane meets: *Lₓ*=*α*₁×*f₁.* Further, optionally, a component *L_{y}* of the long side of the first stop in the direction corresponding to the vertical focal plane meets: *L_{y}*≥*ψ*₁×*f₂*.

For example, FIG. 9a is a schematic diagram of a light spot energy distribution on a horizontal focal plane according to this application. The light spot energy distribution is obtained by simulation of discrete field of view points. In this example, a receiving optical system in which a horizontal focal power of a focal power element is greater than a vertical focal power and a first stop is disposed on a horizontal focal plane is used as an example. At a location of the horizontal focal plane, a light beam in a direction corresponding to the horizontal focal plane has been focused, but a light beam in a direction corresponding to a vertical focal plane has not been focused. Therefore, a light beam of each field of view point received by a detection module is in a shape of a long strip. The first stop is used to enable a light beam in an effective horizontal field of view range (-θ° to θ°) to pass through, and invalid background stray light outside the effective horizontal field of view is suppressed.

A light spot coverage range dx in the direction corresponding to the horizontal focal plane is related to an equivalent focal length fx in the direction corresponding to the horizontal focal plane of the receiving optical system, an equivalent focal length fy in the direction corresponding to the vertical focal plane of the receiving optical system, a divergence angle β of an echo signal, and an image side numerical aperture NA of the receiving optical system. Refer to the following formula 1. $dx = fx \times tanβ + \left(\left|fy-fx\right|\right) \times 2 NA$ formula 1

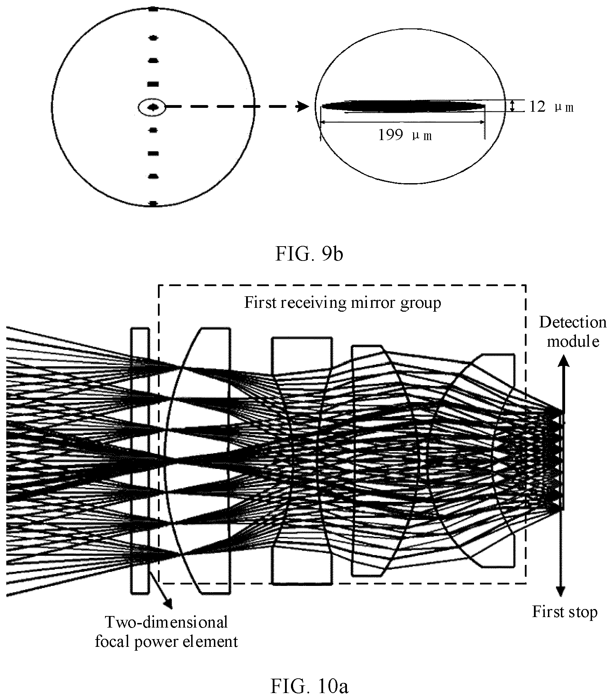

With reference to a simulation result in FIG. 9b, a light spot width of each field of view point in an effective horizontal field of view range in the direction corresponding to the vertical focal plane is less than 12 µm, and a good focusing effect is formed. A length in the direction corresponding to the horizontal focal plane is about 199 µm, and dispersion occurs. It should be understood that the right diagram in FIG. 9b is an enlarged diagram of a light spot in the center of the left diagram.

It should be noted that, during actual application, a particular engineering error is allowed in the foregoing light spot coverage area dx.

It should be understood that a length of a minor axis of a first stop in an elliptic shape is consistent with a length of a short side of a first stop in a rectangular shape, and a length of a major axis of the first stop in the elliptic shape is consistent with a length of a long side of the rectangular stop. For details, refer to the foregoing related descriptions. Details are not described herein again.

In a possible implementation, a first stop may be, for example, a slit stop (or referred to as an aperture stop or an effective stop). For another example, a first stop may alternatively be printing a required light transmission shape on glass or the like by using a silkscreen technology, and another region is black as ink (light transmission is not allowed in the region black as ink). It should be understood that a slit or a light transmission shape of a first stop determines an aperture angle of an echo signal on the horizontal focal plane.

When the first stop is a slit stop, a shape of the first stop specifically means a shape of a slit (or aperture) of the first stop. For example, that a shape of a first stop is a rectangle means that a shape of a slit of the first stop is a rectangle, and a long edge and a short edge of the first stop are a long edge and a short edge of the slit (or aperture) of the first stop. For another example, that a shape of a first stop is an ellipse means that a shape of a slit of the first stop is an ellipse, and a major axis and a minor axis of the first stop are a major axis and a minor axis of the slit of the first stop. When the first stop is a required light transmission shape printed on glass or the like by using a silkscreen technology, the shape of the first stop specifically means a light transmission shape of the first stop. For example, that a shape of a first stop is a rectangle means that a light transmission shape of the first stop is a rectangle, and a long edge and a short edge of the first stop are a long edge and a short edge of the light transmission shape of the first stop. For another example, that a shape of a first stop is an ellipse means that a light transmission shape of the first stop is an ellipse, and a major axis and a minor axis of the first stop are a major axis and a minor axis of the light transmission shape of the first stop.

Case 2: The detection module is located on the horizontal focal plane.

Based on the case 2, when the detection module is located on the horizontal focal plane, the vertical equivalent focal power of the focal power element is greater than the horizontal equivalent focal power. It may be understood that, based on a receiving module including the focal power element, a horizontal focal plane and a vertical focal plane of an echo signal may be separated, and a light beam in a direction corresponding to the vertical focal plane is first focused, and a light beam in a direction corresponding to the horizontal focal plane is then focused, that is, in a direction from an object side to an image side along the receiving module, the vertical focal plane is closer to the object side than the horizontal focal plane, that is, the horizontal focal plane is closer to the image side than the vertical focal plane. At a location of the horizontal focal plane, a light beam in the direction corresponding to the vertical focal plane is diffused. Therefore, when the detection module is located on the horizontal focal plane, a light spot of a received echo signal is diffused (or referred to as broadened) in the direction corresponding to the vertical focal plane.

In order to reduce the effect of background stray light on the echo signal, a second stop may be placed on the vertical focal plane. A shape of the second stop is the same as a shape of a light spot of an echo signal from a detection region. For a shape of the second stop, refer to the foregoing description of the first stop. Details are not described herein again.

For ease of description of the solution, the following uses an example in which the shape of the second stop is a rectangle for description.

In a possible implementation, a short side of the second stop is parallel to the direction corresponding to the vertical focal plane, and a long side of the second stop is parallel to the direction corresponding to the horizontal focal plane. Further, optionally, to reduce impact of background stray light on an echo signal as much as possible, a length L₃ of the short side of the second stop meets: L₃=*α*₂×*f₂*. Herein, *α*₂ represents vertical angular resolution of the receiving optical system, and *f₂* represents an equivalent focal length in the direction corresponding to the vertical focal length of the receiving optical system.

It should be understood that the length L₃ of the short side of the second stop may also meet: L₃>*α*₂×*f₂*. For example, Length L₂ of the short side of the second stop=n₂×*α*₂×*f₂*, where n₂ may be 1.2, 1.5, 2, or the like, and n₂ may be the same as or different from n₁. For another example, the length L₂ of the short side of the second stop may alternatively meet: L₂=*α*₂×*f₂*+Third threshold. In addition, the length L₃ of the short side of the second stop may alternatively meet: L₃<*α*₂×*f₂.* For example, Length L₂ of the short side of the second stop=n₄×*α*₂×*f₂*, where n₄ may be a number less than 1, such as 0.95, 0.8, or 0.7, and n₄ may be the same as or different from n₂. For another example, the length L₂ of the short side of the second stop may alternatively meet: L₂=*α*₂×*f₂-*Fourth threshold. It should be noted that both the third threshold and the fourth threshold are numbers greater than 0, and the first threshold, the second threshold, the third threshold, and the fourth threshold may be the same, or may be different. This is not limited in this application. When the length L₃ of the short side of the second stop meets L₃>*α*₂×*f₂*, utilization of an echo signal can be improved as much as possible. When the length L₃ of the short side of the second stop meets: L₃<*α*₂×*f₂*, the background stray light can be suppressed as much as possible from being emitted to the detection module.

Further, optionally, a length L₄ of a long side of the second stop meets: L₄≥*ψ*₂×*f₁,* where *ψ*₂ represents a horizontal angle of view of the receiving optical system, and *f₁* represents an equivalent focal length *f₁* in the direction corresponding to the horizontal focal plane of the receiving optical system. It should be noted that the horizontal angle of view of the receiving optical system is a maximum angle that can be detected by the receiving optical system in the direction corresponding to the horizontal focal plane.

Generally, the second stop is parallel to the photosensitive surface of the detection module, that is, an included angle between the second stop and the photosensitive surface of the detection module is equal to 0 degrees. Based on this, the length L₃ of the short side of the second stop meets L₃=*α*₂×*f₂,* and the length L₄ of the long side of the second stop meets L₄≥*ψ*₂×*f₁.* When the included angle between the second stop and the photosensitive surface of the detection module is not equal to 0 degrees, to reduce impact of background stray light on signal light as much as possible, a component Ly of the short side of the second stop in the direction corresponding to the vertical focal plane meets: *L_{y}*=*α*₂×*f₂*. Further, optionally, a component *Lₓ* of the long side of the second stop in the direction corresponding to the horizontal focal plane meets: *Lₓ*≥*ψ*₂×*f₁.*

In a possible implementation, the second stop is located on the vertical focal plane, and is configured to allow an echo signal in an effective field of view (namely, a field of view corresponding to a short side range of the second stop) in the direction corresponding to the vertical focal plane to pass through, and can prevent background stray light outside the effective field of view from passing through, thereby helping reduce stray light emitted to the detection module. It should be noted that, for an optical path of the second stop on the vertical focal plane, reference may be made to an optical path of the first stop on the horizontal focal plane, and details are not described herein again.

In a possible implementation, a light spot coverage range dy in the direction corresponding to the vertical focal plane is related to an equivalent focal length fx in the direction corresponding to the horizontal focal plane of the receiving optical system, an equivalent focal length fy in the direction corresponding to the vertical focal plane of the receiving optical system, a divergence angle β of an echo signal, and an image side numerical aperture NA of the receiving optical system. Refer to the following formula 2. $dy = fy \times tanβ + \left(\left|fy-fx\right|\right) \times 2 NA$ formula 2

It should be noted that, during actual application, a particular engineering error is allowed in the foregoing light spot coverage area dy.

It should be understood that a length of a minor axis of a second stop in an elliptic shape is consistent with a length of a short side of a second stop in a rectangular shape, and a length of a major axis of the second stop in the elliptic shape is consistent with a length of a long side of the rectangular stop. For details, refer to the foregoing related descriptions. Details are not described herein again.

For example, the second stop may be, for example, a slit stop (or referred to as an aperture stop or an effective stop). For another example, a second stop may alternatively be printing a required light transmission shape on glass or the like by using a silkscreen technology, and another region is black as ink (light transmission is not allowed in the region black as ink). It should be understood that a slit or a light transmission shape of a second stop determines an aperture angle of an echo signal on the vertical focal plane.

When the second stop is a slit stop, a shape of the second stop specifically means a shape of a slit (or aperture) of the second stop. For example, that a shape of a second stop is a rectangle means that a shape of a slit of the second stop is a rectangle, and a long edge and a short edge of the second stop are a long edge and a short edge of the slit (or aperture) of the second stop. For another example, that a shape of a second stop is an ellipse means that a shape of a slit of the second stop is an ellipse, and a major axis and a minor axis of the second stop are a major axis and a minor axis of the slit of the second stop. When the second stop is a required light transmission shape printed on glass or the like by using a silkscreen technology, the shape of the second stop specifically means a light transmission shape of the second stop. For example, that a shape of a second stop is a rectangle means that a light transmission shape of the second stop is a rectangle, and a long edge and a short edge of the second stop are a long edge and a short edge of the light transmission shape of the second stop. For another example, that a shape of a second stop is an ellipse means that a light transmission shape of the second stop is an ellipse, and a major axis and a minor axis of the second stop are a major axis and a minor axis of the light transmission shape of the second stop.

In a possible implementation, the detection module includes a photosensitive unit (cell), and the cell may be a single photon detector, for example, an SPAD or a digital silicon photomultiplier (silicon photomultiplier, SiPM). Further, optionally, the detection module includes an SPAD array or a SiPM array. When the detection module includes the SPAD array or the SiPM array, for a specific working principle, refer to the related description in FIG. 2. Details are not described herein again.

Further, optionally, the detection module may implement row-and/or column-direction binning light sensitive units. When a same quantity of light sensitive units are used for binning in rows and columns at the same time, an aspect ratio of an image does not change. When a quantity of light sensitive units for binning in a row and that in a column are 2: 1, resolution of the image is reduced by 50%.

When the detection module is placed horizontally and vertically, correspondingly, the focal power element is also placed horizontally and vertically, and the first stop or the second stop may also be placed horizontally and vertically. When the detection module rotates around the optical axis of the receiving module by an angle, the focal power element also needs to rotate at a same angle in a same direction as the detection module, so that the horizontal focal plane or the vertical focal plane separated by the focal power element matches the detection module. The first stop or the second stop may also rotate at a same angle in a same direction as the detection module.

Based on the foregoing content, the following provides four possible implementations of the foregoing receiving optical system with reference to a specific hardware structure, to further understand a structure of the foregoing receiving optical system.

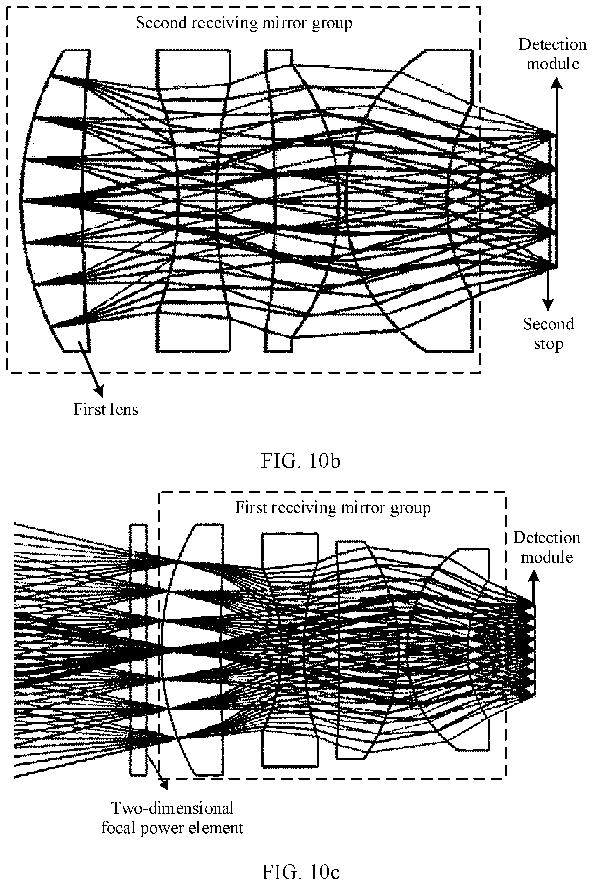

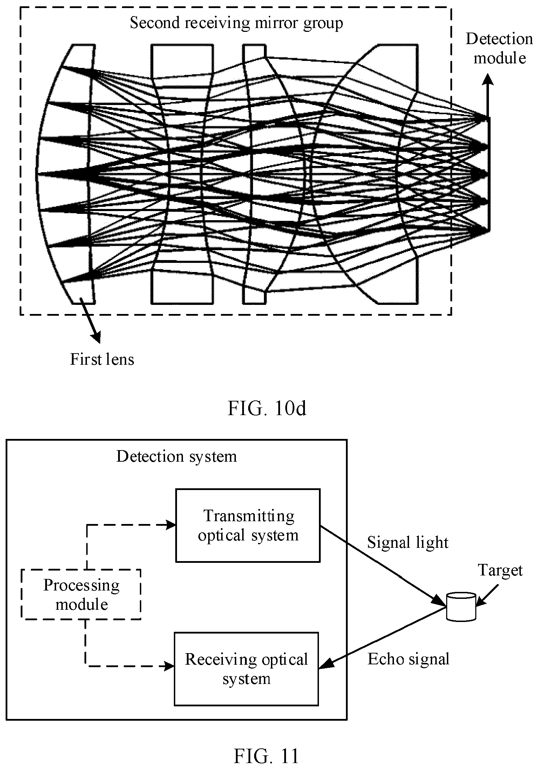

In the following description, an example in which the detection module is located on the vertical focal plane is used. In a direction from the object side to the image side of the receiving optical system, a horizontal focal plane in FIG. 10a and FIG. 10b is closer to an object side than a vertical focal plane, and a horizontal focal plane in FIG. 10c and FIG. 10d is closer to an image side than a vertical focal plane.

FIG. 10a is a schematic diagram of a structure of another receiving optical system according to this application. The receiving optical system may include a receiving module and a detection module. The receiving module includes a first receiving mirror group, a focal power element, and a first stop, where the first stop is located on a horizontal focal plane, the detection module is located on a vertical focal plane, and a horizontal equivalent focal power of the focal power element is greater than a vertical equivalent focal power. In this way, in a direction from an object side to an image side of the receiving optical system, an echo signal may first converge on a horizontal focal plane, and then converge on a vertical focal plane, that is, there is a distance (for example, hundreds of micrometers) between the horizontal focal plane and the vertical focal plane. For possible implementations of the first receiving mirror group, the focal power element, and the first stop, refer to the foregoing related descriptions. Details are not described herein again. It should be understood that, Distance between the vertical focal plane and the horizontal focal plane=Broadened width of a light spot emitted to the detection module/2/tanθ, where θ is an NA of the image side in a direction in which a light spot is broadened.

It should be noted that, in this example, a location relationship between the first receiving mirror module and the focal power element is shown in FIG. 6a. This is not limited in this application.

FIG. 10b is a schematic diagram of a structure of another receiving optical system according to this application. The receiving optical system may include a receiving module and a detection module. The receiving module includes a second receiving mirror group and a second stop, the second stop is located on a horizontal focal plane, the detection module is located on a vertical focal plane, and the second receiving mirror group includes at least one first lens. In this example, the first lens is the 1^{st} lens that is located on an object side and that in the second receiving mirror group, and a horizontal equivalent focal power of the first lens is greater than a vertical equivalent focal power. In this way, in a direction from an object side to an image side of the receiving optical system, an echo signal may first converge on a horizontal focal plane, and then converge on a vertical focal plane.

FIG. 10c is a schematic diagram of a structure of still another receiving optical system according to this application. The receiving optical system may include a receiving module and a detection module. The receiving module includes a first receiving mirror group and a focal power element, and the detection module is located on a vertical focal plane. In this example, a horizontal equivalent focal power of the focal power element is less than a vertical equivalent focal power. In this way, in a direction from an object side to an image side of the receiving optical system, an echo signal may first converge on a vertical focal plane, and then converge on a horizontal focal plane. For possible implementations of the first receiving mirror group and the focal power element, refer to the foregoing related descriptions. Details are not described herein again. It should be understood that, because the vertical focal plane that overlaps a light sensitive surface of the detection module is located before the horizontal focal plane, that is, the echo signal first converges on the detection module, a first stop cannot prevent background stray light from being emitted to the detection module. That is, compared with the receiving optical system shown in FIG. 10a, the receiving optical system shown in FIG. 10c does not have the first stop.

FIG. 10d is a schematic diagram of a structure of still another receiving optical system according to this application. The receiving optical system may include a receiving module and a detection module. The receiving module includes a second receiving mirror group, and the second receiving mirror group includes at least one first lens. In this example, the first lens is the 1^{st} lens that is located on an object side and that is in the second receiving mirror group, and a horizontal equivalent focal power of the first lens is less than a vertical equivalent focal power. In this way, in a direction from an object side to an image side of the receiving optical system, an echo signal may first converge on a vertical focal plane, and then converge on a horizontal focal plane. It should be understood that, because the vertical focal plane that overlaps a light sensitive surface of the detection module is located before the horizontal focal plane, that is, the echo signal first converges on the detection module, a second stop cannot prevent background stray light from being emitted to the detection module. That is, compared with the receiving optical system shown in FIG. 10b, the receiving optical system shown in FIG. 10d does not have the second stop.

It should be noted that the detection module may alternatively be located on a horizontal focal plane. Specifically, "horizontal" in FIG. 10a to FIG. 10d may be replaced with "vertical", and "vertical" may be replaced with "horizontal".

Based on the foregoing described structure and function principles of the receiving optical system, this application may further provide a lidar system. FIG. 11 is a schematic diagram of an architecture of a lidar system according to this application. The lidar system may include a transmitting optical system and a receiving optical system. The transmitting optical system may be configured to transmit signal light, the transmitted signal light may be emitted to a target in the detection region, and an echo signal obtained by reflecting the received signal light by the target pair may be propagated to the receiving optical system. For the receiving optical system, refer to the description in any one of the foregoing embodiments. Details are not described herein again.

In a possible implementation, signal light transmitted by the transmitting optical system is a linear light beam, and an echo signal received by a detection module is also a linear light beam. That is, the lidar system can use the line-scanning line-receiving mode.

The following describes the transmitting optical system.

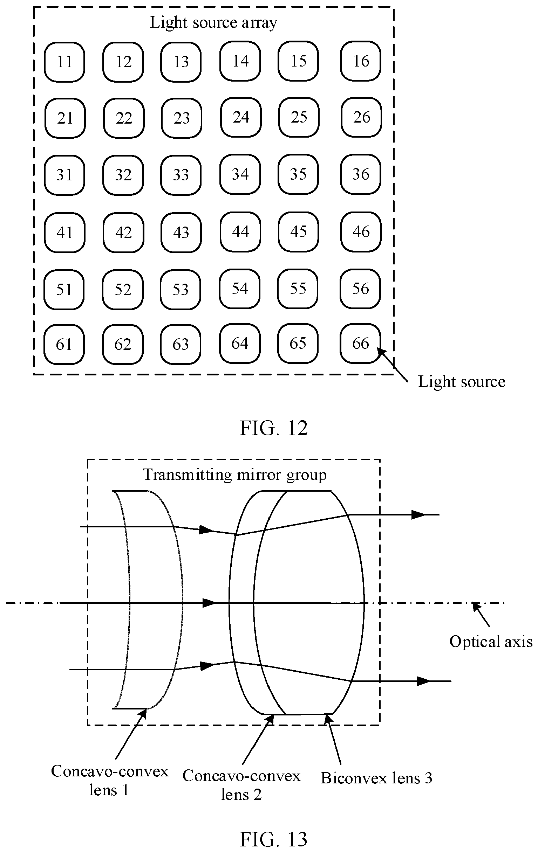

In a possible implementation, the transmitting optical system includes a light source module. Further, optionally, the light source module may be a light source array. Refer to FIG. 12. The light source module includes a light source array, and the light source array includes 6×6 light sources. A light source in the light source array may be, for example, a vertical cavity surface emitting laser (vertical cavity surface emitting laser, VCSEL), and an edge emitting laser (edge emitting laser, EEL). It should be noted that the light source array may alternatively be one row or one column.

It should be noted that the light source array may implement independent addressing. The independent addressing means that a light source in a light source array may be independently gated (or referred to as lighted, turned on, or powered on), and the gated light source may be used to transmit signal light. An addressing manner of the light source array is related to a physical connection relationship of the light source. For example, if light sources in a same column in the light source array are connected in series, and different columns are connected in parallel, light sources (which may be referred to as linear light sources) may be gated column by column. For another example, if light sources in a same row in the light source array are connected in series, and different rows are connected in parallel, light sources (which may be referred to as linear light sources) may be gated row by row. For another example, if all light sources in the light source array are connected in series, or light sources in a same column are connected in series and connected in parallel between different columns, or light sources in a same row are connected in series and connected in parallel between different rows, all light sources (which may be referred to as a plane light source) may be gated at a time. It should be understood that all light sources in the light source array are gated, so that scanning of a full field of view of the lidar system can be implemented. It may also be understood that the full field of view of the lidar system may be obtained by splicing a transmitting field of view of each light source in the light source array.

When the light source in the light source array is gated by row or by column, signal light transmitted by the transmitting optical system is a linear light beam. Correspondingly, a row that corresponds to a gated row in the light source array and that is in a pixel array is gated, or a column that corresponds to a gated column in the light source array and that is in a pixel array is gated. Based on such a gating manner, a working mode of the lidar system may be referred to as a line-scanning line-receiving mode.

It should be noted that the light source module may include an all-solid-state semiconductor laser (diode pumped solid state laser, DPSS), an optical fiber laser, or the like. Further, signal light transmitted by the laser may be shaped into a linear light beam by using a shaping component (for example, a lens, a lens group, or a lens array). It should be understood that the foregoing type of the laser used as the light source module is merely an example, and a specific possible type of the laser of the light source module is not limited in this application.

Further, the transmitting optical system may further include a transmitting mirror group. FIG. 13 is a schematic diagram of a structure of a transmitting mirror group according to this application. The transmitting mirror group is configured to propagate signal light generated by the light source module to a detection region. The transmitting mirror group may be, for example, a lens group. In FIG. 13, an example in which three lenses are included is used: a concavo-convex lens 1, a concavo-convex lens 2, and a biconvex lens 3. Further, optionally, because a divergence angle of signal light from a light source may be large, and there may be a light beam with poor astigmatism quality, the transmitting mirror group may further collimate and shape the signal light, so that the divergence angle of the signal light emitted to the detection region is small, and more signal light can be irradiated to the detection region. It should be understood that a quantity of transmitting mirrors included in the transmitting mirror group is merely an example. In this application, the quantity of transmitting mirrors included in the transmitting mirror group may be greater than that in FIG. 13, or may be less than that in FIG. 13. In addition, a type of the lens is not limited in this application. The transmitting mirror group may alternatively be another single lens or a combination of other lenses, for example, a planoconvex lens or a planoconcave lens.

It should be noted that the transmitting mirror group may be a mirror group that rotates symmetrically around an optical axis of the transmitting mirror group. For example, a transmitting mirror in the transmitting mirror group may be a monolithic spherical lens, or may be a combination of a plurality of spherical lenses. Alternatively, a transmitting mirror group may be a non-rotating symmetric transmitting mirror group. For example, a transmitting mirror in the transmitting mirror group may be a monolithic aspherical lens, or may be a combination of a plurality of aspherical lenses. A combination of a plurality of spherical lenses and/or aspherical lenses helps improve imaging quality of a transmitting optical system and reduce aberration of an optical imaging system.

By using the foregoing lidar system, a light spot of an echo signal that is emitted to the detection module may be broadened in a direction corresponding to a horizontal focal plane or in a direction corresponding to a vertical focal plane (for an effect, refer to FIG. 14a below), thereby helping improve a dynamic range in which the lidar system responds to an echo signal.

In a possible implementation, the lidar system may further include a processing module, configured to determine association information of a target based on an electrical signal from the receiving optical system. For example, the processing module may determine a distance, an orientation, a posture, grayscale information, or the like of the target based on the electrical signal.

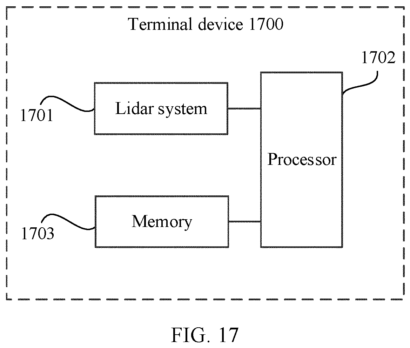

For example, the processing module includes but is not limited to a processor 1702 shown in FIG. 17.

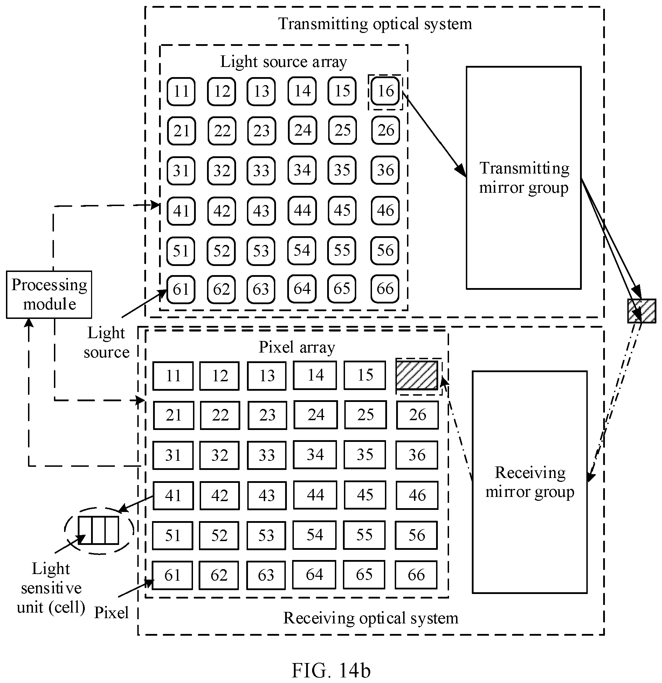

FIG. 14b is a schematic diagram of an architecture of another lidar system according to this application. The lidar system may include a transmitting optical system and a receiving optical system. Further, optionally, the lidar system may further include a processing module. For details, refer to the foregoing related descriptions. The transmitting optical system includes a light source module and a transmitting mirror group, and an example in which the light source module includes 6×6 light sources (namely, a light source array) is used. For possible implementations of the light source module and the transmitting mirror group, refer to the foregoing related descriptions. Details are not described herein again. The receiving optical system includes a receiving mirror group and a detection module. An example in which the detection module includes 6×6 pixels (namely, a pixel array) is used, and an example in which 1×3 light sensitive units are binned by row is used for each pixel. For possible implementations of the detection module and the receiving mirror group, refer to the foregoing related descriptions. Details are not described herein again. It should be understood that the pixel array included in the detection module may alternatively be one row or one column.

It should be noted that the light source module in the lidar system may be a column and a plurality of rows of light sources, and correspondingly, the detection module includes a column and a plurality of rows of pixels. Alternatively, the light source module in the lidar system may include one row and a plurality of columns of light sources, and correspondingly, the detection module includes one row and a plurality of columns of pixels. Alternatively, the light source module in the lidar system may include a plurality of rows and a plurality of columns of light sources, and correspondingly, the detection module includes a plurality of rows and a plurality of columns of pixels.

Based on the foregoing architecture of the lidar system, in a possible implementation, one light source in the light source array corresponds to one pixel in the pixel array. If light sources are gated by column in the light source array, correspondingly, pixels are gated by column in the pixel array. If light sources are gated by row in the light source array, correspondingly, pixels are gated by column in the pixel array. A working mode of such a lidar may be referred to as a line-scanning line-receiving mode.

For ease of description of the solution, the following uses an example in which a direction corresponding to the vertical focal plane is a column direction and a direction corresponding to the horizontal focal plane is a row direction for description.

For example, the light source array is gated by column. Correspondingly, in the row direction, the detection module is pixels obtained by binning of a plurality of light sensing units in the row direction. Based on this, a detection region of the lidar system may be divided into a plurality of equal parts by column, columns in the light source array are sequentially gated, and corresponding linear light beams may sequentially sweep through column regions of the detection region, so that all the detection region can be scanned. Correspondingly, after an echo signal is propagated by the receiving optical system, pixels of a line column in the detection module may receive the echo signal. Because a light spot is broadened in the row direction, a plurality of or even all of light sensitive units in one pixel may be covered in the row direction, so that a dynamic range in which the lidar system responds to an echo signal can be effectively improved. In addition, spatial resolution in the column direction may be maintained without decreasing. It may also be understood that, when the lidar system performs scanning by column, a dynamic range in which a pixel in the row direction of the pixel array responds to an echo signal may be increased, and the spatial resolution of the lidar in the column direction may remain unchanged.

Alternatively, the light source array may be gated by row. Correspondingly, in the column direction, the detection module is a pixel obtained by binning of a plurality of light sensitive units. Based on this, the detection region of the lidar system may be divided into a plurality of equal parts by row, rows in the light source array are sequentially gated, and corresponding linear light beams may sequentially sweep through row regions of the detection region, so that all the detection region can be scanned. After an echo signal is propagated by the receiving optical system, pixels of a line row in the detection module may receive the echo signal. Because a light spot is broadened in the column direction, a plurality of or even all of light sensitive units in one pixel may be covered in the column direction, so that a dynamic range in which the lidar system responds to an echo signal can be effectively improved. In addition, spatial resolution in the row direction of the lidar can be maintained without decreasing. It may also be understood that, when the lidar system performs scanning by row, a dynamic range in which a pixel in the column direction of the pixel array responds to an echo signal may be increased, and the spatial resolution of the lidar in the row direction may remain unchanged.

It should be understood that the lidar system may further include another possible optical element or electronic element. This is not specifically limited in this application. For example, the lidar system may further include a scanning module.

In a possible implementation, the scanning module is configured to: propagate signal light from the transmitting optical system to the detection region, propagate an echo signal to the receiving optical system, and further reflect the echo signal from the detection region to the receiving optical system. The scanning module rotates around a scanning axis to change a scanning angle of the scanning module, so that the scanning module reflects signal light from the transmitting optical system to a detection region at different scanning angles, thereby scanning the detection region, and propagating an echo signal from the detection region to the receiving optical system.

For example, the scanning module may be, for example, one or more of a rotating mirror, a micro-electro-mechanical system (micro electro-mechanical system, MEMS) mirror, or a swing mirror. For example, the scanning module may be a rotating mirror (for example, a foursided reflection mirror), an MEMS mirror, or a swing mirror. For another example, the scanning module may be a combination of a rotating mirror and a swing mirror. For another example, the scanning module may be a combination of a rotating mirror and an MEMS mirror. For another example, the scanning module may be a combination of an MEMS mirror and a swing mirror. For another example, the scanning module may be a combination of an MEMS mirror, a swing mirror, and a rotating mirror. It should be noted that a type of the scanning module is not limited in this application, and any structure that can implement propagating signal light of the transmitting optical system to a detection region and propagating an echo signal to the receiving optical system may be used. In addition, specific forms of the rotating mirror, the MEMS mirror, and the swing mirror are not limited in this application.

In a possible implementation, the transmitting optical system and the receiving optical system may share one scanning module, and the shared scanning module may be, for example, a rotating mirror, an MEMS mirror, or a swing mirror. Alternatively, the transmitting optical system and the receiving optical system each may correspond to one scanning module. For example, a scanning module corresponding to the transmitting optical system may be a rotating mirror, and a scanning module corresponding to the receiving optical system may also be a rotating mirror. For another example, the scanning module corresponding to the transmitting optical system may be a swing mirror, and the scanning module corresponding to the receiving optical system may also be a swing mirror. For another example, the scanning module corresponding to the transmitting optical system may be an MEMS mirror, and the scanning module corresponding to the receiving optical system may also be an MEMS mirror. For another example, the scanning module corresponding to the transmitting optical system may be a rotating mirror, and the scanning module corresponding to the receiving optical system is also an MEMS mirror. For another example, the scanning module corresponding to the transmitting optical system may be a rotating mirror, and the scanning module corresponding to the receiving optical system is also a swing mirror. For another example, the scanning module corresponding to the transmitting optical system may be an MEMS mirror, and the scanning module corresponding to the receiving optical system is a rotating mirror. For another example, the scanning module corresponding to the transmitting optical system may be an MEMS mirror, and the scanning module corresponding to the receiving optical system may also be a swing mirror. The examples are not listed herein one by one.

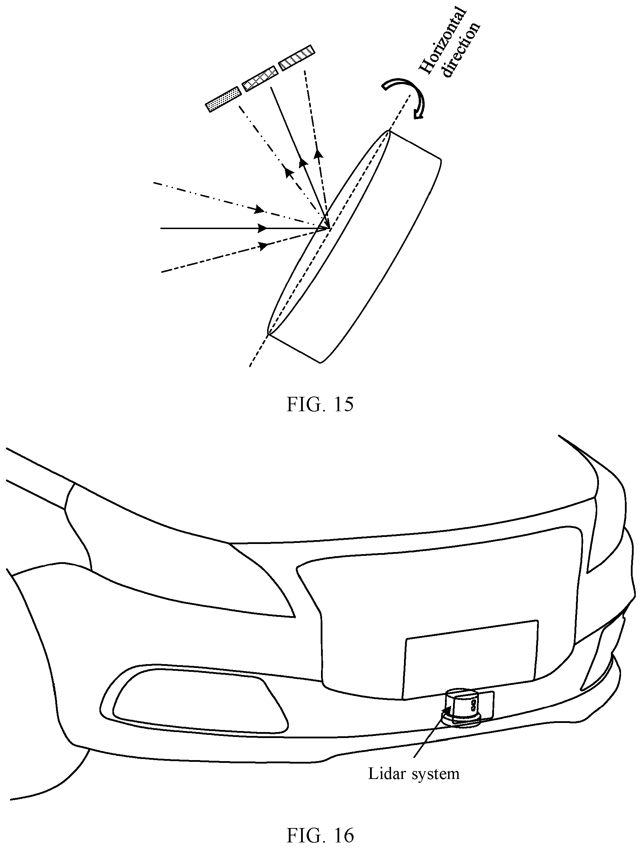

FIG. 15 is a diagram of an optical path of signal light passing through a scanning module according to this application. The scanning module may change a scanning angle in a dimension (for example, in a direction corresponding to a horizontal focal plane or in a direction corresponding to a vertical focal plane), and project, at each scanning angle, signal light from a transmitting optical system to a detection region. In FIG. 15, an example in which the scanning module emits signal light to the detection region at three different scanning angles is used. A line type represents signal light at one scanning angle, and one filling pattern represents one light spot that is emitted to the detection region. When the scanning module rotates in a horizontal direction to change the scanning angle, signal light is projected to the detection region in different directions. It should be understood that, in FIG. 15, an example in which an appearance shape of the scanning module is a cylindrical shape is used. An appearance shape of the scanning module is not limited in this application, for example, may be a cuboid, a square, or another polygon.

In a possible implementation, the scanning module may rotate around a scanning axis in a continuous mode of operation, or rotate around the scanning axis in a stepping mode of operation. This is not limited in this application. During actual application, a specific rotation mode may be preset.

In a possible implementation, a lidar system may be installed on a vehicle. Refer to FIG. 16. In this example, a location of a lidar system on a vehicle is merely an example. The lidar system may be further disposed at any possible location around a vehicle body. This is not limited in this application. Further, optionally, after determining association information of a target, the lidar system may send the association information of the target to the vehicle. The vehicle may plan a driving route based on the determined association information of the target, for example, evade an obstacle on a path to be driven. It should be understood that a shape of the lidar system shown in FIG. 16 is merely an example. The lidar system may alternatively be in another shape in appearance, for example, may alternatively be a cuboid. This is not specifically limited in this application.

Based on the foregoing described structure and function principle of the lidar system, this application may further provide a terminal device. FIG. 17 is a schematic diagram of a structure of a terminal device according to this application. The terminal device 1700 may include a lidar system 1701 in any one of the foregoing embodiments. Further, optionally, the terminal device may further include a processor 1702, and the processor 1702 is configured to invoke a program or instructions to control the lidar system 1701 to obtain an electrical signal. Further, the processor 1702 may further receive an electrical signal from the lidar system 1701, and determine association information of a target based on the electrical signal. Optionally, the terminal device may further include a memory 1703, and the memory 1703 is configured to store a program or instructions. Certainly, the terminal device may further include another component, for example, a wireless communication apparatus.

For the lidar system 1701, refer to the foregoing description of the lidar system. Details are not described herein again.

The processor 1702 may include one or more processing units. For example, the processor 1702 may include an application processor (application processor, AP), a graphics processing unit (graphics processing unit, GPU), an image signal processor (image signal processor, ISP), a controller, a digital signal processor (digital signal processor, DSP), an application-specific integrated circuit (application-specific integrated circuit, ASIC), a central processing unit (central processing unit, CPU), a field programmable gate array (field programmable gate array, FPGA) or another programmable logic device, a transistor logic device, a hardware component, or any combination thereof. Different processing units may be independent components, or may be integrated into one or more processors.

The memory 1703 includes but is not limited to a random access memory (random access memory, RAM), a flash memory, a read-only memory (read-only memory, ROM), a programmable read-only memory (programmable ROM, PROM), erasable programmable read-only memory (erasable PROM, EPROM), electrically erasable programmable read-only memory (electrically EPROM, EEPROM), a register, a hard disk, a removable hard disk, a CD-ROM, or any other form of storage medium well known in the field. For example, a storage medium is coupled to a processor, so that the processor can read information from the storage medium and write information into the storage medium. Certainly, the storage medium may be a component of the processor. The processor and the storage medium may be disposed in an ASIC.

In a possible implementation, the processor 1702 may further plan a driving path of the terminal device based on the determined association information of the target, for example, evade an obstacle in the driving path.

For example, the terminal device may be, for example, a vehicle (for example, an unmanned vehicle, a smart vehicle, an electric vehicle, or a digital vehicle), a robot, a surveying and mapping device, an unmanned aerial vehicle, a smart home device (for example, a television, a ground-scanning robot, a smart desk lamp, an acoustic system, an intelligent lighting system, an electrical control system, home background music, a home theater system, an intercom system, or a video surveillance device), an intelligent manufacturing device (for example, an industrial device), an intelligent transportation device (for example, an AGV, an unmanned transport vehicle, or a truck), an intelligent terminal (for example, a mobile phone, a computer, a tablet computer, a palmtop computer, a desktop computer, a headset, an acoustic device, a wearable device, a vehicle-mounted device, a virtual reality device, or an augmented reality device), or the like.

It should be noted that, in the foregoing embodiments of this application, the direction corresponding to the horizontal focal plane may be a horizontal direction, and the direction corresponding to the vertical focal plane may be a vertical direction. Correspondingly, the horizontal focal power is a focal power in a horizontal direction, and the vertical focal power is a focal power in a vertical direction.

In embodiments of this application, unless otherwise stated or there is a logic conflict, terms and/or descriptions between different embodiments are consistent and may be mutually referenced, and technical features in different embodiments may be combined based on an internal logical relationship thereof, to form a new embodiment.

In this application, "vertical" may not mean absolute perpendicularity, and some engineering errors may be allowed. "At least one" means one or more, and "a plurality of" means two or more. The term "and/or" describes an association relationship between associated objects, and indicates that three relationships may exist. For example, A and/or B may represent the following cases: Only A exists, both A and B exist, and only B exists, where A and B may be singular or plural. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between associated objects. In a formula in this application, the character "/" indicates a "division" relationship between the associated objects. In addition, in this application, the term "for example" is used to represent giving an example, an illustration, or a description. Any embodiment or design scheme described as an "example" in this application should not be explained as being more preferred or having more advantages than another embodiment or design scheme. Alternatively, it may be understood that the word "example" is used to present a concept in a specific manner, and does not constitute a limitation on this application.

It may be understood that various numbers in the embodiments of this application are merely used for differentiation for ease of description, and are not used to limit the scope of the embodiments of this application. The sequence numbers of the foregoing processes do not mean execution sequences, and the execution sequences of the processes should be determined based on functions and internal logic of the processes. The terms "first", "second", and another similar expression are intended to distinguish between similar objects but do not necessarily indicate a specific order or sequence. In addition, the terms "include", "have", and any variant thereof are intended to cover non-exclusive inclusion, for example, include a series of steps or units. Methods, systems, products, or devices are not necessarily limited to those steps or units that are literally listed, but may include other steps or units that are not literally listed or that are inherent to such processes, methods, products, or devices.

Although this application is described with reference to specific features and embodiments thereof, it is clear that various modifications and combinations may be made to them without departing from the spirit and scope of this application. Correspondingly, the specification and accompanying drawings are merely examples for description of the solutions defined by the appended claims, and are considered as any of or all modifications, variations, combinations or equivalents that cover the scope of this application.

## Claims

1. A receiving optical system, comprising a receiving module and a detection module, wherein the receiving module is configured to: receive an echo signal, separate a horizontal focal plane from a vertical focal plane of the echo signal, wherein for separating the horizontal focal plane from the vertical focal plane of the echo signal, the receiving module is configured to focus the echo signal passing through a focal power element on the horizontal focal plane and the vertical focal plane separately and to set a horizontal equivalent focal power and a vertical equivalent focal power of the focal power element to be different, and propagate the echo signal to the detection module, wherein the echo signal is obtained after signal light from a transmitting optical system is reflected by a target in a detection region, and the focal power element is comprised in the receiving module; and
the detection module is configured to perform optical-electrical conversion on the echo signal, to obtain an electrical signal, wherein the electrical signal is used to determine association information of the target.

2. The system according to claim 1, wherein the receiving module comprises a receiving mirror group and a focal power element, wherein the receiving mirror group comprises at least one of a lens, a reflection mirror, or an equivalent of a reflection mirror, and the focal power element comprises a one-dimensional focal power element or a two-dimensional focal power element; and
a horizontal equivalent focal power and a vertical equivalent focal power of the focal power element are different.

3. The system according to claim 2, wherein the one-dimensional focal power element comprises at least one or a combination of a one-dimensional cylindrical mirror, a one-dimensional wedge, or a one-dimensional grating; or
the two-dimensional focal power element comprises at least one or a combination of a ring mirror, a two-dimensional cylindrical mirror, a saddle mirror, a two-dimensional grating, or a two-dimensional wedge.

4. The system according to claim 2 or 3, wherein the focal power element is located on an object side of the receiving mirror group; or
the focal power element is located between the receiving mirror group and the detection module; or
the focal power element is located between any two adjacent receiving mirrors in the receiving mirror group, and the receiving mirror group comprises a plurality of receiving mirrors.

5. The system according to any one of claims 2 to 4, wherein the detection module is located on the vertical focal plane, and the horizontal equivalent focal power of the focal power element is greater than the vertical equivalent focal power.

6. The system according to claim 5, wherein the receiving optical system further comprises a first stop, and the first stop is located on the horizontal focal plane.

7. The system according to claim 6, wherein a shape of the first stop is a rectangle, a short side of the first stop is parallel to a direction corresponding to the horizontal focal plane, and a long side of the first stop is parallel to a direction corresponding to the vertical focal plane.

8. The system according to claim 7, wherein a length L₁ of the short side of the first stop meets: L₁=Horizontal angular resolution of the receiving optical system×Equivalent focal length in a horizontal direction of the receiving optical system.

9. The system according to claim 7 or 8, wherein a length L₂ of the long side of the first stop meets: L₂≥Vertical angle of view of the receiving optical system×Equivalent focal length in a vertical direction of the receiving optical system.

10. The system according to any one of claims 2 to 4, wherein the detection module is located on the horizontal focal plane, and the vertical equivalent focal power of the focal power element is greater than the horizontal equivalent focal power of the focal power element.

11. The system according to claim 10, wherein the receiving optical system further comprises a second stop, and the second stop is located on the vertical focal plane.

12. The system according to claim 11, wherein a shape of the second stop is a rectangle, a short side of the second stop is parallel to a direction corresponding to the vertical focal plane, and a long side of the second stop is parallel to a direction corresponding to the horizontal focal plane.

13. The system according to claim 12, wherein a length L₃ of the short side of the second stop meets: L₃=Vertical angular resolution of the receiving optical system×Equivalent focal length in a vertical direction of the receiving optical system.

14. The system according to claim 12 or 13, wherein a length L₄ of the long side of the second stop meets: L₄≥Horizontal angle of view of the receiving optical system×Equivalent focal length in a horizontal direction of the receiving optical system.

15. A lidar system, comprising a transmitting optical system and the receiving optical system according to any one of claims 1 to 14, wherein
the transmitting optical system is configured to transmit the signal light.

## Patentansprüche

1. Optisches Empfangssystem, das ein Empfangsmodul und ein Erkennungsmodul umfasst, wobei
das Empfangsmodul konfiguriert ist zum: Empfangen eines Echosignals, Trennen einer horizontalen Brennebene von einer vertikalen Brennebene des Echosignals, wobei das Empfangsmodul zum Trennen der horizontalen Brennebene von der vertikalen Brennebene des Echosignals konfiguriert ist zum Fokussieren des Echosignals, das ein Brechkraftelement in der horizontalen Brennebene und der vertikalen Brennebene getrennt durchquert, und zum Einstellen einer horizontalen äquivalenten Brechkraft und einer vertikalen äquivalenten Brechkraft des Brechkraftelements, damit sie unterschiedlich sind, und zum Ausbreiten des Echosignals zu dem Erkennungsmodul, wobei das Echosignal erhalten wird, nachdem ein Signallicht von einem lichtdurchlässigen optischen System von einem Ziel in einem Erkennungsgebiet reflektiert wurde, und wobei das Brechkraftelement in dem Empfangsmodul enthalten ist; und
wobei das Erkennungsmodul konfiguriert ist zum Durchführen einer optischelektrischen Umwandlung an dem Echosignal, um ein elektrisches Signal zu erhalten, wobei das elektrische Signal verwendet wird, um Zuordnungsinformationen des Ziels zu ermitteln.

2. System nach Anspruch 1, wobei das Empfangsmodul eine Empfangsspiegelgruppe und ein Brechkraftelement umfasst, wobei die Empfangsspiegelgruppe mindestens eines von einer Linse, einem Reflexionsspiegel oder einer Äquivalenz eines Reflexionsspiegels umfasst, und wobei das Brechkraftelement ein eindimensionales Brechkraftelement oder ein zweidimensionales Brechkraftelement umfasst; und
wobei eine horizontale äquivalente Brechkraft und eine vertikale äquivalente Brechkraft des Brechkraftelements unterschiedlich sind.

3. System nach Anspruch 2, wobei das eindimensionale Brechkraftelement mindestens einen oder eine Kombination umfasst von: einem eindimensionalen zylindrischen Spiegel, einem eindimensionalen Keilprisma oder einem eindimensionalen Gitter; oder
wobei das zweidimensionale Brechkraftelement mindestens einen oder eine Kombination umfasst von: einem Ringspiegel, einem zweidimensionalen zylindrischen Spiegel, einem Sattelspiegel, einem zweidimensionalen Gitter, oder einem zweidimensionalen Keilprisma.

4. System nach Anspruch 2 oder 3, wobei sich das Brechkraftelement auf einer Objektseite der Empfangsspiegelgruppe befindet, oder
wobei sich das Brechkraftelement zwischen der Empfangsspiegelgruppe und dem Erkennungsmodul befindet; oder
wobei sich das Brechkraftelement zwischen zwei beliebigen benachbarten Empfangsspiegeln in der Empfangsspiegelgruppe befindet, und wobei die Empfangsspiegelgruppe eine Vielzahl von Empfangsspiegeln umfasst.

5. System nach einem der Ansprüche 2 bis 4, wobei sich das Erkennungsmodul in der vertikalen Brennebene befindet, und wobei die horizontale äquivalente Brechkraft des Brechkraftelements größer als die vertikale äquivalente Brechkraft ist.

6. System nach Anspruch 5, wobei das optische Empfangssystem außerdem eine erste Sperre umfasst, und wobei sich die erste Sperre in der horizontalen Brennebene befindet.

7. System nach Anspruch 6, wobei eine Form der ersten Sperre ein Rechteck ist, wobei eine kurze Seite der ersten Sperre parallel zu einer Richtung ist, die der horizontalen Brennebene entspricht und wobei eine lange Seite der ersten Sperre parallel zu einer Richtung ist, die der vertikalen Brennebene entspricht.

8. System nach Anspruch 7, wobei eine Länge L₁ der kurzen Seite der ersten Sperre erfüllt: L₁ = horizontale Winkelauflösung des optischen Empfangssystems x äquivalenter Brennweite in einer horizontalen Richtung des optischen Empfangssystems.

9. System nach Anspruch 7 oder 8, wobei eine Länge L₂ der langen Seite der ersten Sperre erfüllt: L₂ ≥ vertikale Blickwinkelauflösung des optischen Empfangssystems x äquivalenter Brennweite in einer vertikalen Richtung des optischen Empfangssystems.

10. System nach einem der Ansprüche 2 bis 4, wobei sich das Erkennungsmodul in der horizontalen Brennebene befindet, und wobei die vertikale äquivalente Brechkraft des Brechkraftelements größer als die horizontale äquivalente Brechkraft des Brechkraftelements ist.

11. System nach Anspruch 10, wobei das optische Empfangssystem außerdem eine zweite Sperre umfasst, und wobei sich die zweite Sperre in der vertikalen Brennebene befindet.

12. System nach Anspruch 11, wobei eine Form der zweiten Sperre ein Rechteck ist, wobei eine kurze Seite der zweiten Sperre parallel zu einer Richtung ist, die der vertikalen Brennebene entspricht und wobei eine lange Seite der zweiten Sperre parallel zu einer Richtung ist, die der horizontalen Brennebene entspricht.

13. System nach Anspruch 12, wobei eine Länge L₃ der kurzen Seite der zweiten Sperre erfüllt: L₃ = vertikale Blickwinkelauflösung des optischen Empfangssystems x äquivalenter Brennweite in einer vertikalen Richtung des optischen Empfangssystems.

14. System nach Anspruch 12 oder 13, wobei eine Länge L₄ der langen Seite der zweiten Sperre erfüllt: L₄ ≥ horizontale Winkelauflösung des optischen Empfangssystems x äquivalenter Brennweite in einer horizontalen Richtung des optischen Empfangssystems.

15. Lidar-System, das ein durchlässiges optisches System und das optische Empfangssystem nach einem der Ansprüche 1 bis 14 umfasst, wobei das durchlässige optische System konfiguriert ist, um das Lichtsignal durchzulassen.

## Revendications

1. Système optique de réception, comportant un module de réception et un module de détection, dans lequel
le module de réception est configuré de façon à : recevoir un signal d'écho, séparer un plan focal horizontal d'un plan focal vertical du signal d'écho, pour séparer le plan focal horizontal du plan focal vertical du signal d'écho, le module de réception étant configuré de façon à focaliser le signal d'écho passant à travers un élément de puissance focale sur le plan focal horizontal et sur le plan focal vertical séparément, et à régler une puissance focale équivalente horizontale et une puissance focale équivalente verticale de l'élément de puissance focale pour qu'elles soient différentes, et de façon à propager le signal d'écho jusqu'au module de détection, le signal d'écho étant obtenu après qu'un signal lumineux venant d'un système optique de transmission a été réfléchi par une cible dans une région de détection, et l'élément de puissance focale étant compris dans le module de réception ; et
le module de détection étant configuré de façon à exécuter une conversion optique-électrique sur le signal d'écho, afin d'obtenir un signal électrique, le signal électrique étant utilisé pour déterminer des informations d'association de la cible.

2. Système selon la revendication 1, dans lequel le module de réception comporte un groupe de miroirs de réception et un élément de puissance focale, le groupe de miroirs de réception comportant au moins soit une lentille, soit un miroir de réflexion, soit un équivalent d'un miroir de réflexion, et l'élément de puissance focale consistant en un élément de puissance focale unidimensionnel ou en un élément de puissance focale bidimensionnel ; et
une puissance focale équivalente horizontale ou une puissance focale équivalente verticale de l'élément de puissance focale sont différentes.

3. Système selon la revendication 2, dans lequel l'élément de puissance focale unidimensionnel comporte au moins soit un miroir cylindrique unidimensionnel, soit un coin unidimensionnel, soit un réseau unidimensionnel, soit une combinaison de ceux-ci ; ou
l'élément de puissance focale bidimensionnel comporte au moins soit un miroir annulaire, soit un miroir cylindrique bidimensionnel, soit un miroir selle, soit un réseau bidimensionnel, soit un coin bidimensionnel, soit une combinaison de ceux-ci.

4. Système selon la revendication 2 ou 3, dans lequel l'élément de puissance focale est situé sur un côté objet du groupe de miroirs de réception ; ou dans lequel
l'élément de puissance focale est situé entre le groupe de miroirs de réception et le module de détection ; ou
l'élément de puissance focale est situé entre deux miroirs de réception adjacents quelconques dans le groupe de miroirs de réception, et le groupe de miroirs de réception comporte une pluralité de miroirs de réception.

5. Système selon l'une quelconque des revendications 2 à 4, dans lequel le module de détection est situé sur le plan focal vertical, et la puissance focale équivalente horizontale de l'élément de puissance focale est plus grande que la puissance focale équivalente verticale.

6. Système selon la revendication 5, dans lequel le système optique de réception comporte en outre une première butée, et la première butée est située sur le plan focal horizontal.

7. Système selon la revendication 6, dans lequel une forme de la première butée est un rectangle, un côté court de la première butée est parallèle à une direction correspondant au plan focal horizontal, et un côté long de la première butée est parallèle à une direction correspondant au plan focal vertical.

8. Système selon la revendication 7, dans lequel une longueur L₁ du côté court de la première butée satisfait : L₁ = résolution angulaire horizontale du système optique de réception x longueur focale équivalente dans une direction horizontale du système optique de réception.

9. Système selon la revendication 7 ou 8, dans lequel une longueur L₂ du côté long de la première butée satisfait : L₂ ≥ angle vertical de vue du système optique de réception x longueur focale équivalente dans une direction verticale du système optique de réception.

10. Système selon l'une quelconque des revendications 2 à 4, dans lequel le module de détection est situé sur le plan focal horizontal, et la puissance focale équivalente verticale de l'élément de puissance focale est plus grande que la puissance focale équivalente horizontale de l'élément de puissance focale.

11. Système selon la revendication 10, dans lequel le système optique de réception comporte en outre une deuxième butée, et la deuxième butée est située sur le plan focal vertical.

12. Système selon la revendication 11, dans lequel une forme de la deuxième butée est un rectangle, un côté court de la deuxième butée est parallèle à une direction correspondant au plan focal vertical, et un côté long de la deuxième butée est parallèle à une direction correspondant au plan focal horizontal.

13. Système selon la revendication 12, dans lequel une longueur L₃ du côté court de la deuxième butée satisfait : L₃ = résolution angulaire verticale du système optique de réception x longueur focale équivalente dans une direction verticale du système optique de réception.

14. Système selon la revendication 12 ou 13, dans lequel une longueur L₄ du côté long de la deuxième butée satisfait : L₄ ≥ angle horizontal de vue du système optique de réception x longueur focale équivalente dans une direction horizontale du système optique de réception.

15. Système lidar comportant un système optique de transmission et le système optique de réception selon l'une quelconque des revendications 1 à 14, le système optique de transmission étant configuré de façon à transmettre le signal lumineux.
